(19)

Europäisches
Patentamt
European
Patent Office
Office européen
des brevets

(11)     **EP 1 988 362 B1**

(12)          **EUROPEAN PATENT SPECIFICATION**

(45) Date of publication and mention
of the grant of the patent:
**25.08.2010  Bulletin 2010/34**

(51) Int Cl.:
***G01C 21/34*** *(2006.01)*     ***G08G 1/0968*** *(2006.01)*

(21) Application number: **07009032.9**

(22) Date of filing: **04.05.2007**

(54) **Route determination method and device**

Verfahren und Vorrichtung zur Routenbestimmung

Procédé et dispositif de détermination d'itinéraire

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**05.11.2008  Bulletin 2008/45**

(73) Proprietor: **Harman Becker Automotive Systems
GmbH
76307 Karlsbad (DE)**

(72) Inventor: **Vorländer, Peter
20535 Hamburg (DE)**

(74) Representative: **Bertsch, Florian Oliver et al
Kraus & Weisert
Patent- und Rechtsanwälte
Thomas-Wimmer-Ring 15
80539 München (DE)**

(56) References cited:
**US-B1- 6 477 515**

• ISMAIL CHABINI ET AL: "Adaptations of the A*
Algorithm for the Computation of Fastest Paths
in Deterministic Discrete-Time Dynamic
Networks" IEEE TRANSACTIONS ON
INTELLIGENT TRANSPORTATION SYSTEMS,
IEEE, NEW YORK, NY, US, vol. 3, no. 1, March
2002 (2002-03), XP011074868 ISSN: 1524-9050
• KANOULAS E ET AL: "Finding Fastest Paths on
A Road Network with Speed Patterns" 3 April 2006
(2006-04-03), DATA ENGINEERING, 2006. ICDE
'06. PROCEEDINGS OF THE 22ND
INTERNATIONAL CONFERENCE ON ATLANTA,
GA, USA 03-07 APRIL 2006, PISCATAWAY, NJ,
USA,IEEE, PAGE(S) 10-10 , XP010911597 ISBN:
0-7695-2570-9 * abstract * * page 7, right-hand
column, paragraph 2 - page 8, left-hand column,
paragraph 4 *

## EP 1 988 362 B1

### Description

This invention relates to route determination, in particular to a method and device for determining a route, e.g., on a road network, based on an estimation function. The method and system of the present invention may be advantageously employed for any route search, in particular for searching for routes in a road network, e.g., onboard a vehicle.

Finding a good, preferably optimum, route from a given starting point to a given destination is one of the key features of car navigation systems or other systems providing routing information. Throughout this specification, the term "optimum route" is used for a least-cost route, the costs of a route being determined by the sum of costs of edges and vertices of a graph traversed by the route. For example, when a route is determined in a road network, the costs of the route correspond to the costs of the road segments traversed plus the costs associated with road segment junctions. Depending on the cost model employed, the costs may reflect distances, travel times and/or user preferences. Similarly, terms such as "good route" refer to routes that are associated with small costs, i.e., the quality of a route is measured with reference to the costs accrued upon traversal of the route. For a given graph defined by a set of edges and a set of vertices at which graph edges interconnect, various cost models may be defined. For example, in navigation systems, different cost models may correspond to different optimization criteria, such as fastest route, shortest route, avoiding tunnels, avoiding highways, avoiding ferries, avoiding toll roads or similar, and combinations of these options and preferences.

### Related Art

Several standard algorithms for finding an optimum route or a good route on a graph are known in the art, the most famous of which are Dijkstra's algorithm and the A*-algorithm.

In Dijkstra's algorithm, the road network, or more generally, a graph is explored starting from the starting point of the route by edge relaxation or expansion, the different vertices of the road network being visited in order of minimum costs associated with a route connecting the vertex and the starting point. When the destination is reached in the expansion of graph edges, an optimum route from the starting point to the destination has been found, and Dijkstra's algorithm terminates.

The A*-algorithm is a modification of Dijkstra's algorithm, which employs an estimation function for vertices of the graph. The estimation function for a given vertex provides an estimate for costs associated with an optimum route connecting the given vertex and the destination. In the route search, different paths are ranked according to a priority which is given by the sum of the costs accrued from the starting point to the vertex so far, and the estimation function value for the vertex. If the estimation function is such that it never overestimates costs of an optimum route connecting a vertex and the destination, the A*-algorithm is known to find a correct solution to the optimum path problem. Conventionally, the estimation function is determined based on simple geometrical criteria, such as an air distance.

Frequently, the route search for car navigation is performed on a dual graph of the road network, in which vertices of the dual graph represent road segments of the road network, in order to accommodate turning restrictions. In many applications, a route search is nowadays expected to provide added convenience features, such as determining several alternative routes, accommodating user preferences, dynamical routing, or similar. Both the usage of the dual graph to perform the route search and the above-mentioned additional features are costly in view of storage space requirements and computational time.

US 6,477,515 B1 discloses a method of and device for computing a least cost path having the features of the preamble of the independent claims.

### Summary

Therefore, there exists a need in the art for improved methods and devices for determining routes that allow the complexity of the route search to be decreased. In particular, there exists a need in the art for improved methods and devices for determining routes that have moderate storage space and/or computational time requirements.

According to the present invention, this need is addressed by a method and device as defined by the independent claims. The dependent claims define preferred or advantageous embodiments.

According to an aspect of the invention, a method of determining a route is provided. The method comprises determining, in a first step, estimation function values for a plurality of vertices based on a first graph, an estimation function value for a vertex representing a lower bound on costs associated with a route from the vertex to the destination, and searching, in a second step, for a route from a starting point to the destination on a second graph based on the estimation function values determined in the first step. Since the estimation function values are determined based on the first graph rather than being based exclusively on air-distance based estimates, an estimation function may be determined which closely approximates the actual costs for a least-cost route from a vertex to the destination. Such an approximation function will be referred to as a "good" approximation function in the following. The good estimation function may, in turn, be employed to reduce complexity of the subsequent route search in the second step.

If, for a given vertex, no estimation function value has been determined in the first step, it is determined in the second step.

The determining an estimation function value for a vertex in the first step may comprise searching for a route from the vertex to the destination on the first graph, which search may be performed using Dijkstra's algorithm or an A*-algorithm on the first graph. The route search on the first graph may be performed starting at the destination and expanding the search towards the starting point. In other words, the search direction may be reversed in the first step. When the estimation function values are determined by performing a route search on the first graph, for vertices explored during the route search on the first graph, good estimation function values may be provided which may represent, or at least provide a good approximation to, the exact minimum costs associated with any route from the respective vertex to the destination. Based on this estimation function value, the search tree of the subsequent search in the second step may be reduced in size.

In the second step, at least one further route, different from the route, to the destination may be searched or determined based on the estimation function values. The at least one further route may comprise at least one of an alternative route from the starting point to the destination or a route from another starting point to the destination. The search for another route may, for example, be initiated when a vehicle leaves a pre-determined route, or when costs of edges or vertices of the second graph change, which may be effected, e.g., by user-specified avoidance options, traffic information signals, or dynamical routing. By utilizing the results of the first step, i.e., the estimation function values, for plural route searches, the average computational time required for a given route search may be reduced since intermediate results, namely the estimation function values, may be repeatedly used.

At least a subset of the estimation function values determined in the first step may be stored and may be retrieved in the second step.

The determining the estimation function values in the first step may be based on a first cost model and the searching for the route from the starting point to the destination in the second step may be based on a second cost model. Since the first and second cost models may be different, by suitable selection of the first cost model, the estimation function values determined in the first step may be re-used for several different second cost models. In particular, the costs associated with a vertex and/or edge of the first graph according to the first cost model may represent a lower bound on costs associated with a corresponding vertex and/or edge of the second graph according to the second cost model. Thereby, the estimation function values determined based on the first cost model provide a valid underestimation of costs accrued on a route to the destination even for a route search based on the second cost model.

The costs associated with vertices and/or edges of the first graph according to the first cost model may be time-independent. The costs associated with vertices and/or edges of the second graph according to the second cost model may be variable. The costs according to the second cost model may be varied based on at least one of user preferences, a traffic information signal, a time of the day or a date. The varying of the costs according to the second cost model may implemented by increasing costs for at least one vertex and/or edge relative to the first cost model. In this manner, a first cost model which does not take into consideration variable cost contributions may be employed to determine the estimation function values.

The first graph may be defined so that a route search on the first graph is, on average, faster than a route search on the second graph, e.g., by defining the first graph so that it has a smaller number of vertices than the second graph. By such a suitable definition of the first graph, the computational complexity and/or storage space requirements in determining the estimation function values may be reduced. For example, vertices of the first graph may represent road segments of a road network, and, in the first step, turning restrictions in the road network may be neglected. The first and second graphs may also be defined so that edges of the first graph represent road segments of a road network, and vertices of the second graph represent road segments of the road network. I.e., the first and second graphs may be dual graphs to one another. In another embodiment, the first graph may be identical to the second graph.

The method may also be performed in more than two steps or stages. For example, the first step may comprises defining a third graph, performing a route search on the third graph, and utilizing a result of the route search on the third graph to determine the estimation function values for the plurality of vertices. By iteratively utilizing results of preceding stages in subsequent stages, the computational complexity of the route search may be further reduced.

The graph may represent one of a road network, a computer network, or an infrastructure network. In particular, the method according to various embodiments may be employed in routing on a road network and may be performed by a navigation system onboard a vehicle.

According to another aspect of the invention, a device for determining a route to a destination, in particular on a road network, is provided. The device comprises a storage unit storing graph data defining vertices and edges of at least one of a first graph and a second graph, and a processor coupled to the storage unit to retrieve the graph data. The processor determines, in a first step, estimation function values for a plurality of vertices based on the first graph, an estimation function value for a vertex representing a lower bound on costs associated with a route from the vertex to the destination, and performs, in a second step, a route search from a starting point to the destination on a second graph based on the estimation function values determined in the first step. Since the processor determines the estimation function values based on the first graph, rather than by exclusively utilizing air-distance based estimates, a good estimation function may be determined and may be advantageously harnessed in the subsequent route search in the second step.

The processor may perform a route search on the first graph to determine the estimation function values, e.g., by starting at the destination and expanding towards the starting point to determine the estimation function values.

In the second step, the processor may perform at least one further route search to the destination based on the estimation function values determined in the first step, thereby utilizing the results obtained in the first step for plural route searches in the second step. By re-using intermediate results, namely the estimation function values, for several route searches, the average computational time required for each of the route searches may be decreased.

The processor may determine the estimation function values in the first step based on a first cost model and may perform the route search from the starting point to the destination in the second step based on a second cost model. The first and second cost models may be distinct. In particular, costs associated with vertices and/or edges of the first graph according to the first cost model may be time-independent, and costs associated with vertices and/or edges of the second graph according to the second cost model may be variable. In this manner, by suitably selecting the first cost model so that its costs represent a lower bound on the corresponding costs of the second cost models contemplated for the specific application, the estimation function values determined based on the time-independent first cost model may be re-used for different second cost models, even when the latter include varying costs.

The device may comprise an input unit to receive a user input, the processor being coupled to the input unit and adjusting costs of the second cost model based on the user input. The device may, additionally or alternatively, comprise a clock unit to determine a time and/or date, the processor being coupled to the clock unit and adjusting costs of the second cost model based on the time and/or date. The device may, additionally or alternatively, comprise a traffic message receiver to receive a traffic information signal, the processor being coupled to the traffic message receiver and adjusting costs of the second cost model based on the traffic information signal. Thus, the device may be configured to adjust costs of the second cost model based on user preferences, based on time or date in dynamical routing, or based on traffic information.

The device may also comprise a position determining means to determine a current vehicle position, the processor being coupled to the position determining means and comparing the current vehicle position to the route from the starting point to the destination. The processor may automatically perform a further route search from the current vehicle position to the destination on the second graph based on a result of the comparison.

The device according to the various embodiments may be configured so that the processor may perform the method according to any one aspect or embodiment of the invention.

According to another aspect, a navigation system is provided which comprises an input unit to receive an input specifying a destination, an output unit to output information on a route, and the device for determining a route according to any one aspect or embodiment of the invention. The navigation system, which may be a portable navigation system or which may be installed on a vehicle, allows route searches to be performed onboard a vehicle.

According to another aspect, a data storage medium is provided, the data storage medium having stored thereon instructions which, when executed by a processor of a navigation system, direct the processor to perform the method according to any one aspect or embodiment of the invention.

It is to be understood that, while several embodiments of the invention will be described with reference to a "road network" in order to explain the present invention, the application of the present invention is not limited to physical road networks. Rather, the present invention may be applied to any network or graph in which route searches may be performed. Examples include ferry connections, data connections in a computer network, power transmission lines, or airplane routes.

Further, it should also be noted that, although the present invention will be described with reference to graphs that can be embedded into a two-dimensional space, the present invention is not limited thereto. Rather, the principles of the present invention are equally applicable to higher dimensional objects, e.g., three-dimensional graphs.

It is anticipated that one of the fields of application of the present invention will be the determination of routes in a road network, in particular in a navigation system onboard a vehicle.

Brief Description of the Drawings

Additional features and advantages of the present invention will become more readily appreciated from the following detailed description of preferred or advantageous embodiments with reference to the accompanying drawings, wherein:

Fig. 1 shows a schematic block diagram representation of a navigation system comprising a device for determining a route according to an embodiment of the invention;

Figs. 2A and 2B schematically show an exemplary road network;

Fig. 3 is a flow diagram representation of a method of determining a route according to an embodiment;

Fig. 4 schematically illustrates portions of a map explored in a route search, Figs. 4A and 4B representing a first and second step of a route search according to an embodiment of the invention, and Fig. 4C representing a conventional route search;

Fig. 5 is a flow diagram representation of a method of determining a route according to another embodiment;

Fig. 6 is a flow diagram representation of a method of determining a route according to another embodiment;

Fig. 7 schematically illustrates a route search according to the methods of Figs. 5 and 6 for the exemplary road network of Fig. 2;

Fig. 8 schematically illustrates portions of a map explored in a route search according the method of Fig. 6;

Fig. 9 is a flow diagram representation of steps of utilizing stored estimation function values in a route determination;

Fig. 10 schematically illustrates the steps of Fig. 9 for the exemplary road network of Fig. 2;

Fig. 11 is a flow diagram representation of a method of determining a route according to another embodiment;

Fig. 12 schematically illustrates a first graph and a second graph representing the exemplary road network of Fig. 2;

Fig. 13 is a flow diagram representation of a method of determining a route according to another embodiment;

Fig. 14A schematically illustrates a route search according to the method of Figs. 13 for the exemplary road network of Fig. 2, and Fig. 14B schematically represents a third graph utilized in the route search.

Description of Preferred Embodiments

Hereinafter, exemplary embodiments of the invention will be explained with reference to the drawings. It is to be understood that the following description is given only for the purpose of better explaining the present invention and is not to be taken in a limiting sense. It is also to be understood that, unless specifically noted otherwise, the features of the various embodiments described below may be combined with each other.

While the present invention will be described with reference to a route search on a graph representing a road network in the following, it will be appreciated that the present invention is not limited to this application and may be readily used for determining routes in any graph or network. For example, the present invention may be applied to route searches in power supply networks, in optical or electrical networks for signal transmission, in computer networks or any other infrastructure or other network.

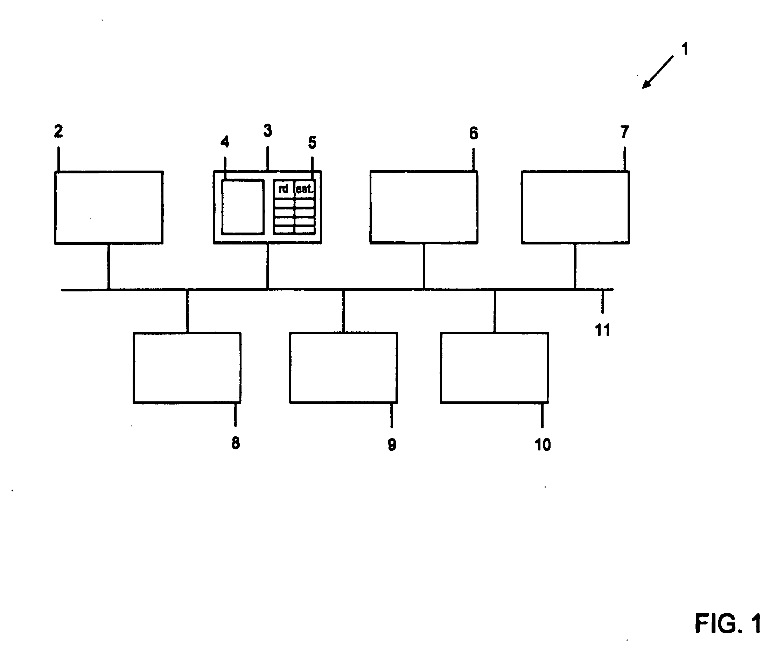

With reference to Fig. 1, a navigation system 1 according to an embodiment of the invention will be described, which comprises a device for determining a route according to an embodiment of the invention. The system comprises a processor 2, a storage unit 3 containing graph data 4, an input unit 6, an output unit 7, a position determining means, e.g., a GPS receiver 8, a traffic message receiver 9 for receiving traffic information signals, and a clock unit 10 which provides a time of the day and/or date.

The processor 2 is adapted to perform a route search on the graph represented by the graph data 4 stored in the storage unit 3. In particular, the processor 2 is adapted to perform the route search employing a search method or search algorithm which is based on an estimation function, e.g., an A*-algorithm or variants thereof. The storage unit 3 may be constituted by any suitable storage medium, e.g., a CD-ROM, a CD-RW, a DVD, a memory card, or an internal hard disc. The graph data 4 comprises information on vertices and/or edges of the road network. For example, the graph data 4 may comprise information on the geographical position of end points of road segments and on connections to other road segments at these end points, such as at road junctions or crossings. The graph data may further comprise information on costs that are associated with road segments or road segment vertices. A set of costs associated with road segments or road segment vertices of a graph will be referred to as "cost model" hereinafter. Depending on the cost model, these costs may represent the length of a road segment for a shortest route cost model, or the traversal time of a road segment and the time for turning from one road segment into another road segment at a junction or crossing for a fastest route cost model. Costs corresponding to various other cost models may also be stored in the storage unit 3, e.g., costs which represent increments or absolute cost values of road segments or road segment vertices in dependence on user preferences. Further, the storage unit 3 may also store estimation function data 5 for a plurality of road segments or road segment vertices, the estimation value for a road segment vertex representing a lower bound on costs associated with a route from the road segment vertex to a destination. As will be explained in more detail below, after inputting of a destination by a user, the processor 2 determines the estimation function data 5 and stores the data 5 in the storage unit 3. In other exemplary embodiments, the estimation function data 5 may also be stored in a further storage unit separate from the storage unit 3 storing the graph data, or may be held in a working memory. In one embodiment, the processor 2 may determine the estimation function data 5 based on both the destination and a starting point of the route search. In one embodiment, the processor 2 may set the starting point of the route search to be identical to the current vehicle position determined by the GPS receiver 8, or identical to a position that is determined based on the current vehicle position.

Information on the destination as well as user preferences may be input into the system 1 via the input unit 6 which may be configured, e.g., as a touch screen, a keypad or a microphone and speech recognition device. The processor 2 evaluates the information input via input unit 6 to perform a search for a route, or to adjust costs of a cost model based on user preferences. Information on the route from a starting point to the destination is output to the user via the output unit 6, which may comprise, e.g., a display screen and/or a loudspeaker.

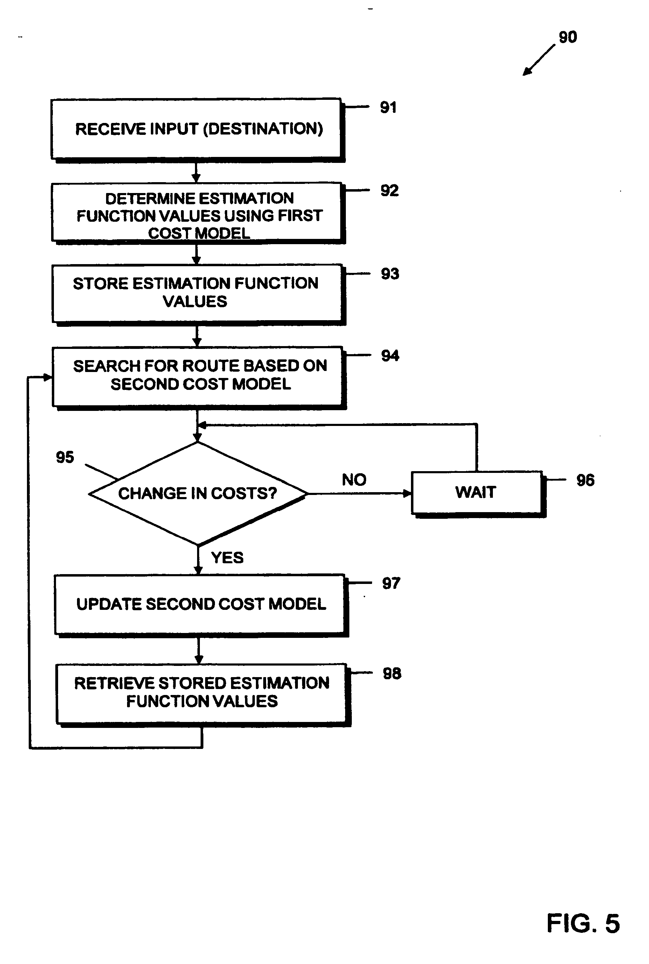

A current vehicle position determined by the position determining means 8 and traffic information received at the traffic message receiver 9 is provided to the processor 2 which, as will be described more fully with reference to Figs. 5-8 below, initiates a new route search based on the information provided by the position determining means 8 and/or the traffic message receiver 9, utilizing the estimation function data 5 stored in the storage unit 3. Similarly, the clock unit 10 provides a current time of the day to the processor 2 which may adjust the cost model for the graph on which the route search is performed based on the current time of the day, e.g., in dynamical routing, taking into account time variations of costs associated with road segments and/or road segment vertices due to varying traffic conditions.

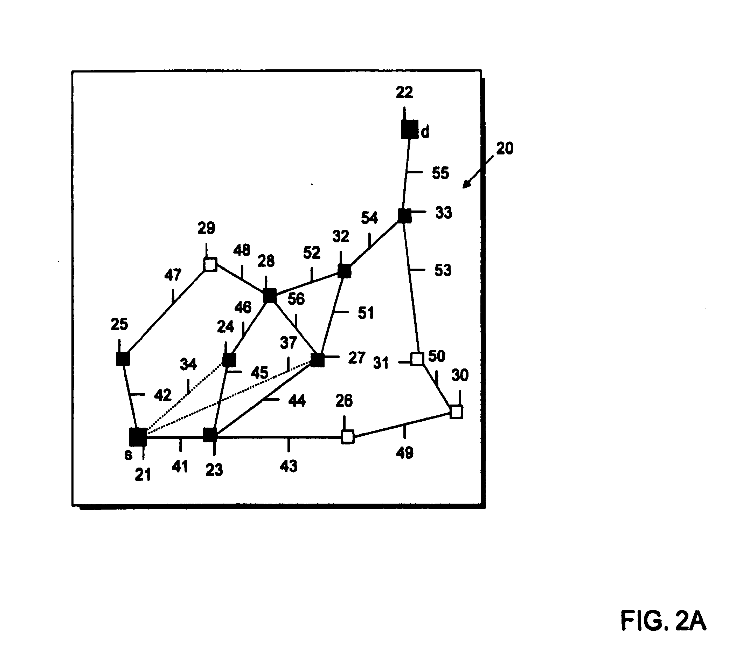

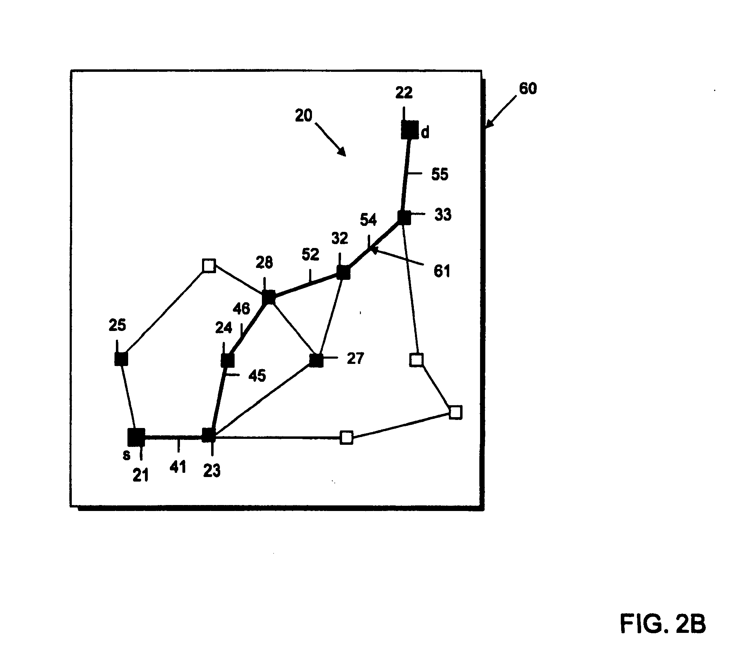

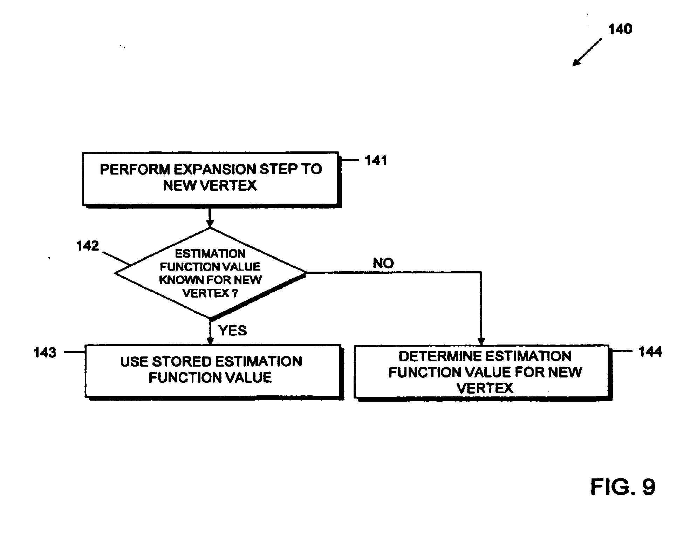

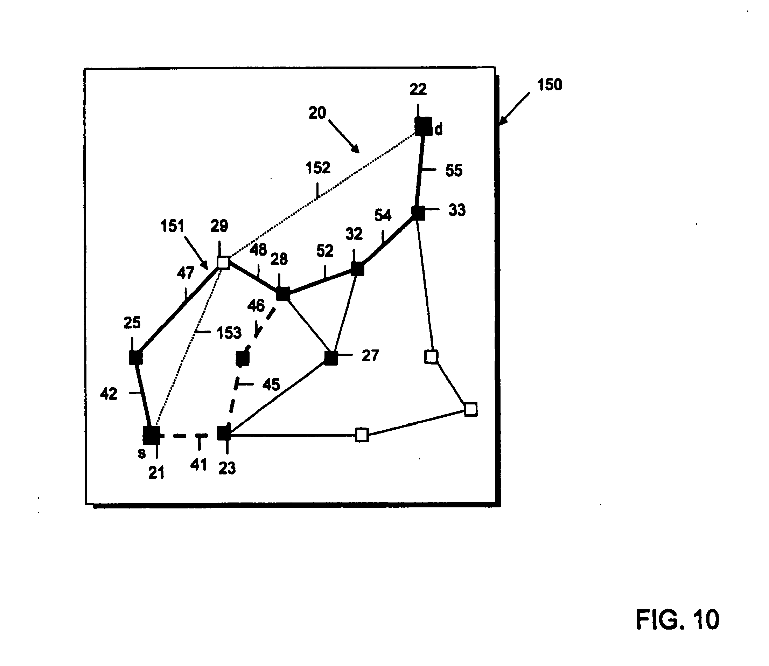

The methods and devices explained with reference to Figs. 2-8 and Figs. 11-14 below do, by themselves, not fall under the wording of the independent claims unless they also include the features of the embodiment described with reference to Figs. 9 and 10 below.

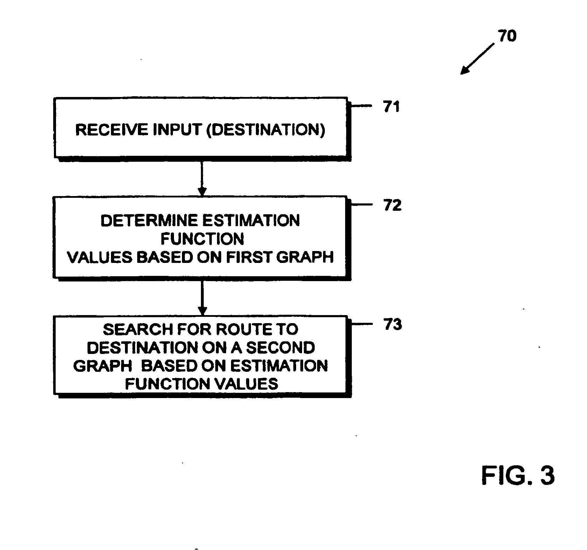

With reference to Figs. 2 and 3, a method of determining a route on a road network according to an embodiment will be described. The method may be performed by the processor 2 coupled to the storage unit 3 of the navigation system 1.

Figs. 2A and 2B illustrate an exemplary road network 20, with reference to which the method of determining a route will be explained. The road network comprises a plurality of road segment vertices 21-33 (thirteen in the example shown), indicated as boxes in Fig. 2 and interconnected by a plurality of road segments 41-56 (sixteen in the example shown). The road segments 41-56 form edges of the graph representing the road network 20 of Fig. 2.

Fig. 3 is a flow diagram representation of the method 70 of determining a route according to the embodiment. According to the method, the route search on the road network 20 is performed in two steps or phases, namely a first step or phase in which estimation function values are determined for a plurality of the vertices 21-33 of the road network 20 based on the road network 20. In a second step or phase, the estimation function values are utilized to search for a route from a starting point, indicated as 21 in Fig. 2, to a destination, indicated as 22 in Fig. 2.

Correspondingly, in the method 70, at 71, a user input indicating at least a desired destination is received. At 72, estimation function values are determined for a plurality of vertices based on a first graph representing the road network. The estimation function value for a vertex determined at 72 provides a lower bound on costs associated with a route from the vertex to the destination. At 73, a search for a route to the destination is performed based on the estimation function values determined at 72. As used herein in connection with the determining of estimation function values at 72, the term "based on the first graph" refers to an action which is not only based on a geometrical arrangement of individual vertices of the first graph, but is based on a relative arrangement and/or the interconnection of at least two vertices of the first graph by a graph edge.

As will be explained in more detail below, the first graph utilized at 72 to determine the estimation function values may be identical to or different from a second graph, on which the route search in the second step at 73 is performed. In one exemplary embodiment, both the first graph utilized at 72 and the second graph utilized at 73 represent the road network on which a route search is to be performed, with edges of the first graph and the second graph corresponding to road segments. I.e., for the exemplary road network 20 of Fig. 2, the road segments 41-56 may correspond to edges of both the first graph and the second graph, and the road segment vertices 21-33 may correspond to vertices of both the first graph and the second graph.

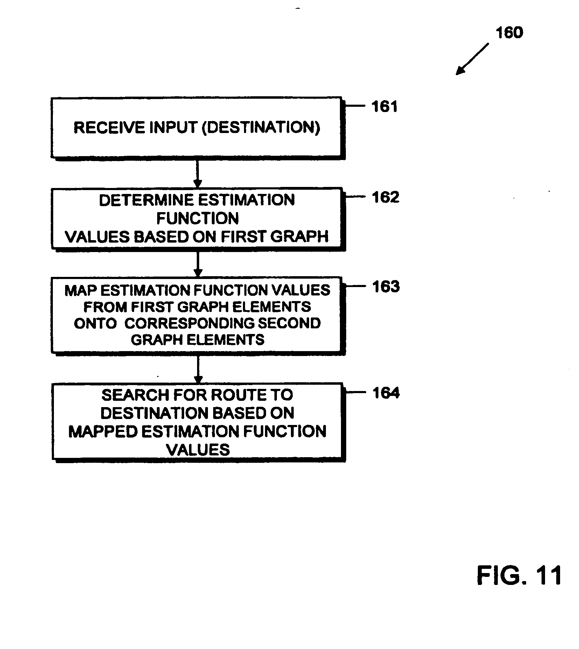

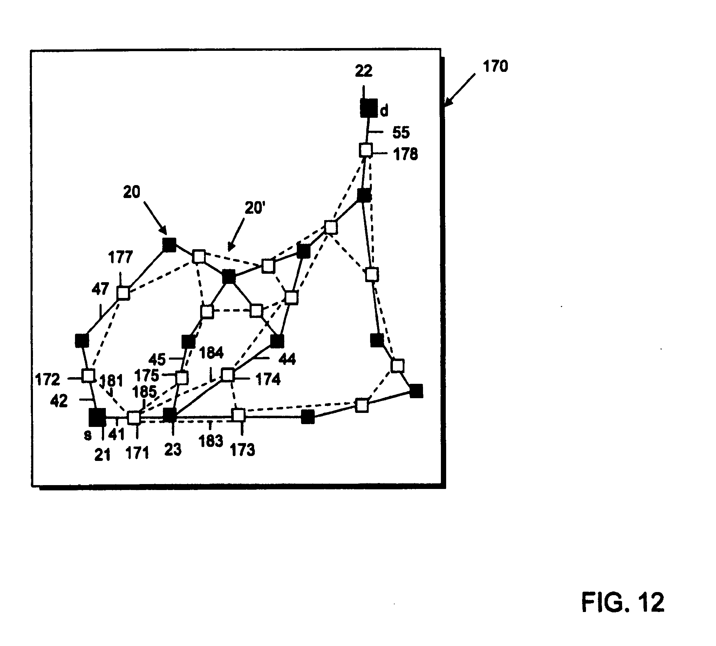

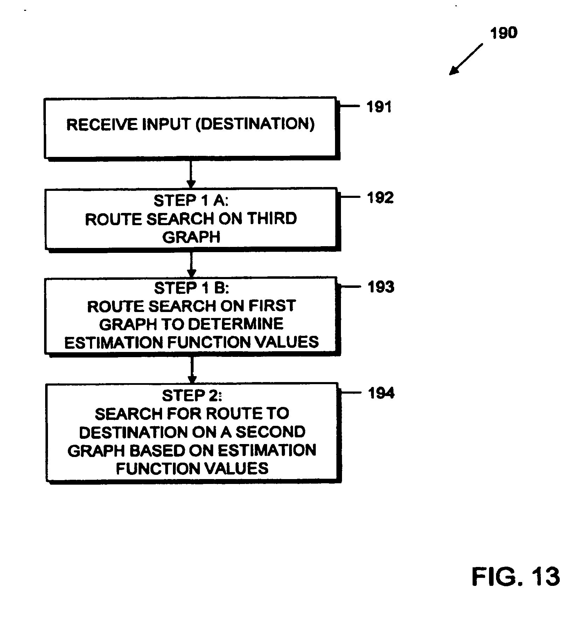

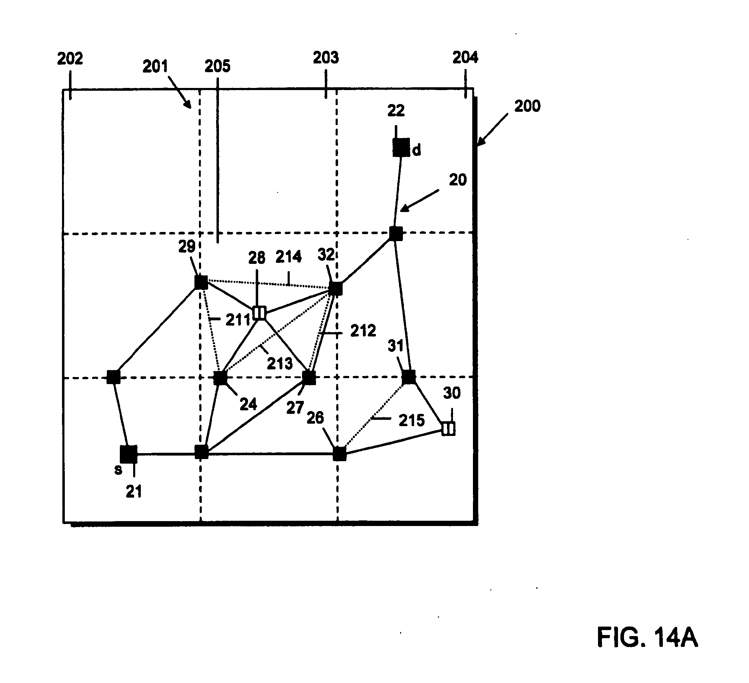

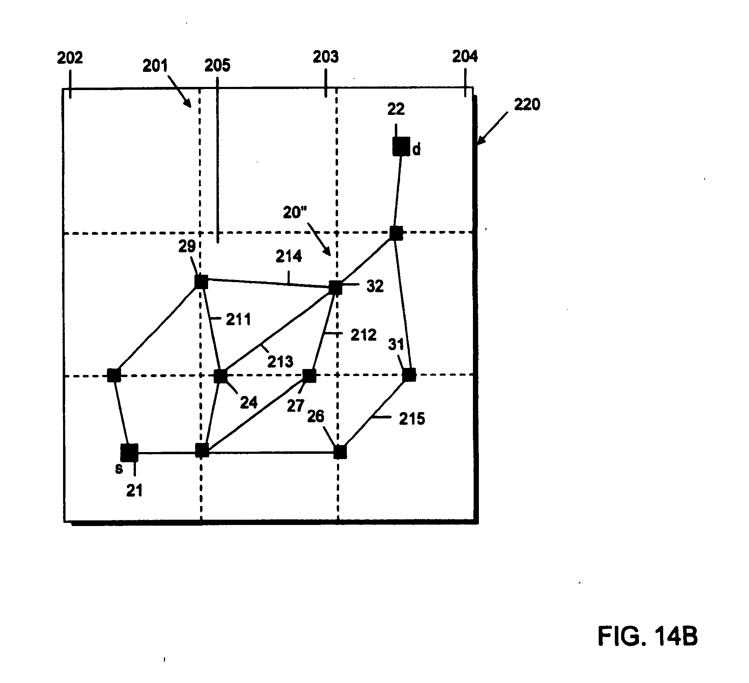

It will be appreciated that many modifications of the method 70 may be implemented. For illustration, the route search at 73 and the determination of estimation function values at 72 may be based on different cost models, as will be explained in more detail with reference to Figs. 5-8 below; according to the invention, the route search at 73 may also be based on estimation function values that are not determined at 72, as will be explained in more detail with reference to Figs. 9 and 10 below; the first graph that is employed to determine the estimation function values at 72 and the second graph on which the route search is performed at 73 may be distinct, as will be explained in more detail with reference to Figs. 11 and 12 below; and the method of determining a route may comprise more than two distinct phases or steps, e.g., three phases, as will be explained in more detail with reference to Figs. 13 and 14 below.

Reverting to Figs. 2 and 3, one implementation of the method 70 will be described referring to the road network 20 of Fig. 2. For illustrative purposes only, it will be assumed that the cost models for determining the estimation function values at 72 and for the route search at 73 are identical, and that both the determining the estimation function values at 72 and the route search at 73 are performed on the same graph, namely on the primary graph in which the road segments 41-55 correspond to graph edges.

To determine the estimation function values, a route search is performed starting at the destination 22 and expanding towards the starting point 21. In an embodiment, the route search starting at the destination 22 is performed using Dijkstra's algorithm. In another embodiment, the route search starting at the destination 22 and directed towards the starting point 21 is performed employing an A*-algorithm. In the latter case, any suitable estimation function may be employed, e.g., an air-distance based estimation function, as schematically indicated by the dotted lines 34 and 37 in Fig. 2A. It is to be noted that, while in the first phase the route search is performed starting at the destination 22, the costs that are summed up upon traversal of a road segment 41-55 or a vertex 21-33 are the costs associated with a travel from the starting point 21 towards the destination 22. For example, even if road segment 55 is a one-way road that allows travel only from vertex 33 to vertex 22, in which case the costs for traversing the road segment 55 from vertex 22 towards vertex 33 are infinite, only the smaller costs reflecting traversal of the road segment 55 from vertex 33 to vertex 22 are taken into account in the search starting at the destination 22. Said differently, when determining the estimation function values, only the search direction is reversed, while the routes found respect the traffic rules imposed on a travel from the starting point 21 to the destination 22 and therefore represent valid routes to the destination 22.

The route search starting at the destination 22, irrespective of whether it is performed using Dijkstra's algorithm, the A*-algorithm or another suitable algorithm, yields a search tree containing vertices of the road network 20 and, for each of these vertices, the costs associated with a travel from the respective vertex to the destination 22. The search starting at the destination 22 may be terminated when the starting point 21 is reached, but, in other embodiments, may also be continued further. For example only, the search may be continued until, e.g., the costs reach a pre-determined threshold or the number of edge expansion steps in the algorithm reaches a given threshold. In another embodiment, the search starting at the destination 22 may be terminated even before the starting point 21 is reached. As will be appreciated, not all vertices 21-33 of the road network 20 have to be explored in the route search starting at the destination 22, depending on the termination criteria. Correspondingly, the costs associated with a travel from the respective vertex to the destination 22 may be determined only for a subset of the vertices 21-33 of the road network 20. In the exemplary road network 20 of Fig. 2, the route search starting at the destination 22 visits vertices 33, 32, 28, 27, 24, 23, 21 and 25, respectively, as schematically indicated by full squares in Fig. 2. For any vertex v of these vertices, the route search starting at the destination 22 provides the exact costs costs(v,d) for a route from the vertex v to the destination based on the cost model that is employed in the first step. These costs are subsequently used in the route search from the starting point 21 to the destination 22 at step 73.

With reference to Fig. 2B, the route search at 73 will be explained in more detail next. Fig. 2B is a schematic representation 60 of the road network 20 in which an optimum route 61 connecting the starting point 21 and the destination 22 is shown. In the exemplary road network, the optimum route 61 traverses the road segments 41, 45, 46, 52, 54 and 55 and the vertices 23, 24, 28, 32 and 33, respectively. The route search from the starting point 21 to the destination 22 is performed using an A*-algorithm or another search algorithm utilizing an estimation function, in which the next "branch" of the search tree leading to a vertex v is selected such that

$$f(v) = g(v) + h(v) \qquad \text{Eq. (1)}$$

is minimum, where

$$g(v) = costs(s,v) \qquad \text{Eq. (2)}$$

represents the costs accrued along a route from the starting point s to the vertex v and

$$h(v) \leq costs(v,d) \qquad \text{Eq. (3)}$$

is the estimation function value for the vertex v which represents a lower bound on the costs for a route from the vertex v to the destination d. For any vertex for which costs(v,d) has been determined in the search starting at the destination at 72, the estimation function value may be set equal to costs(v,d), i.e.,

$$h(v) = costs(v,d) \qquad\qquad Eq.\ (4),$$

while for any vertex which has not been visited in the route search at 72, another suitable estimation function value which satisfies Eq. (3) may be used, if required, as will be described in more detail with reference to Figs. 9 and 10 below.

It will be appreciated that the estimation function value h(v) that has been determined based on the road network 20 represents the exact costs for the remaining path to the destination and therefore represents the best possible estimation function value, assuming that the cost model for the route search at 72 and for the route search at 73 is identical. Therefore, when the A*-algorithm performed in the second step 73 utilizes the estimation function values h(v) = costs(v,d) found in the first step 72, the search tree may collapse onto a single branch that leads directly along the optimum route 61, i.e., from the starting point 21 via vertices 23, 24, 28, 32 and 33 to the destination 22. Since the search tree from the starting point 21 to the destination 22 only comprises a single branch for the example shown in Fig. 2B, the route search according to the method 70 of Fig. 3 at step 73, which is based on the estimation function values determined at 72, may require little computational resources, in particular a reduced computational time as compared to an A*-algorithm which exclusively uses air-distance based estimation function values.

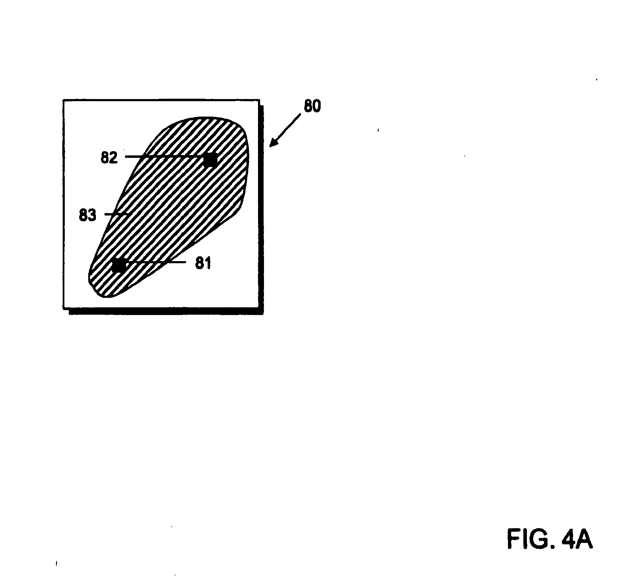

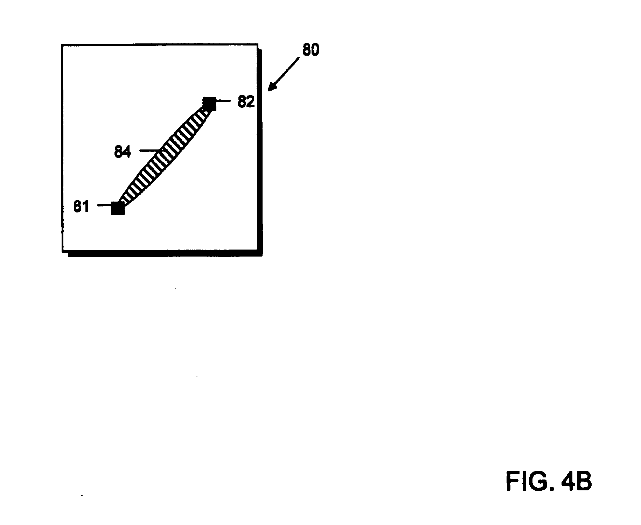

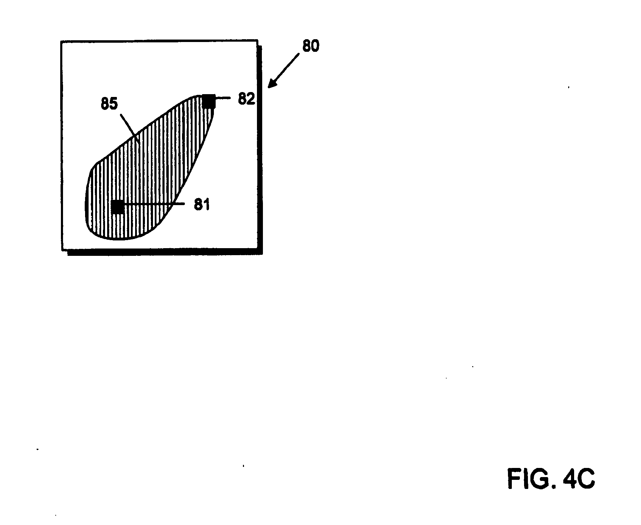

This effect of the method 70 is schematically illustrated in Fig. 4 which depicts portions of a map that are explored during various stages of a route search according to an embodiment of the invention (Figs. 4A and 4B) and during a conventional route search (Fig. 4C), respectively. Fig. 4 shows a map portion 80 containing road segments (not shown). It will be assumed that a search for a route from a starting point 81 to a destination 82 is to be performed. As illustrated in Fig. 4A, according to the method 70, in step 72, a region 83 of the map 80 is searched starting from the destination 82 and expanding the search towards the starting point 81 in order to determine estimation function values for vertices located inside this region 83. As illustrated in Fig. 4B, in the subsequent route search performed in step 73 from the starting point 81 to the destination 82, only a much smaller region 84 of the map 80 has to be searched since good estimation function values have been previously established in step 72 and are utilized in step 73.

By contrast, when a conventional A*-algorithm is performed to determine the route from the starting point 81 to the destination 82 by expanding the search tree starting at the starting point 81, a region 85 has to be searched which is usually large compared to the region 84, as schematically illustrated in Fig. 4C.

It is to be understood that, even when the estimation function values are determined based on the graph in the first step 72, the search tree that is explored in the second step 73 does not always have to collapse onto a single search branch, as is the case in the illustrative example of Fig. 2B. For example, as will be described more fully with reference to Figs. 5-10 below, if the cost model employed in the second step 73 is different from the cost model used in the reverse search in the first step 72, e.g., due to avoidance options, traffic information, dynamical routing or similar, the costs costs(v,d) determined at 72, in the following denoted by costs1(v,d) to reflect that these costs have been determined based on a first cost model used in the first step, will in general not be identical to the minimum costs of a route from the vertex v to the destination d determined based on the new, second cost model used in the second step. The latter costs which correspond to the second cost model will be denoted by costs2(v,d) in the following. As will be explained next, the estimation function values determined in the first step may be advantageously employed as an estimation function in the second step even when the first and second cost models are different.

Fig. 5 is a flow diagram representation of a method 90 of determining a route according to another embodiment. The method may, for example, be performed by the processor 2 of the navigation system 1. In the method 90, at 91 a user input specifying a desired destination is received. At 92, estimation function values for a plurality of vertices are determined based on a first graph and utilizing a first cost model. The determining of the estimation function values at 92 may be implemented in any one of the ways described with reference to Figs. 3 above. In particular, the estimation function values for a plurality of vertices may be determined by performing a route search on the first graph starting at the destination and expanding towards a starting point. For a vertex v of the plurality of vertices, the estimation function value determined at 92 is set equal to the costs associated with a route from the vertex v to the destination d according to the first cost model, costs1(v,d). At 93, the estimation function values costs1(v,d) determined at 92 are stored in a further storage unit for subsequent use. In the exemplary embodiment 1 shown in Fig. 1, the estimation function values are also stored in the storage unit 3 as data 5, i.e., the storage unit storing graph data and the further storage unit storing the estimation function values are integrally formed. The further storage unit in which the estimation function values are stored may, however, also be distinct from the storage unit 3 storing the graph data 4. For example, the further storage unit may be a working memory, e.g., a RAM, in which the estimation function values are kept for subsequent use.

At 94, a search for a route from the starting point to the destination is performed on a second graph. Similarly to step 73 in the method of Fig. 3, the route search at 94 is performed using an A\*-algorithm or another algorithm which employs an estimation function. However, the second cost model employed in step 94 does no need to be identical to the first cost model. It will be assumed that, in the embodiment of Fig. 5, the first cost model is selected such that it represents a lower bound on the second cost model employed in the route search of step 94. I.e., for any vertex or edge of the first graph, the costs associated with this vertex or edge according to the first cost model are less than or equal to the costs associated with a corresponding vertex or edge of the second graph according to the second cost model. The estimation function values determined at 92 serve as estimation function values in the route search at 94, i.e., the next branch of the search tree is selected so that

$$f(v) = g(v) + h(v) \qquad \text{Eq. (5)}$$

is minimum, where

$$g(v) = costs2(s,v) \qquad \text{Eq. (6)}$$

represents the costs accrued along a route from the starting point s to the vertex v according to the second cost model, and the estimation function value at vertex v is

$$h(v) = costs1(v,d) \qquad \text{Eq. (7),}$$

i.e., the costs determined at 92 according to the first cost model, when costsl(v,d) have been determined. The route determined at 94 may, e.g., be output to a user.

After determining the route from the starting point to the destination, at 95 it is monitored whether an event incurring a change of costs of a vertex or edge of the second graph occurs. If no cost change incurring event is detected at 95, the monitoring at 95 is repeated after a wait state 96. If it is determined at 95 that costs of a vertex or edge of the second graph according to the second cost model change, the second cost model is updated at 97 to accommodate the change in costs. As has already been explained above, the first cost model used in step 92 is selected so that it provides a lower bound on costs according to the second cost model even when the latter is updated at 97. In other words, the first cost model is selected so that it represents a lower bound on any second cost model for which the results of the first step are anticipated to be used. At 98, the stored estimation function values are retrieved. The method then returns to 94, where the route is determined again based on the updated second cost model and the stored estimation function values.

It will be appreciated that according to the method 90 of the embodiment of Fig. 5 the estimation function values determined based on the first cost model at 92 may be used several times for subsequent route determinations at 94, even when costs in the second cost model vary, without requiring the estimation function values to be re-computed, provided that the estimation function values determined at 92 underestimate the real costs associated with a route from a vertex v to the destination d determined according to the second cost model. This may be achieved by suitably selecting the first cost model. In one embodiment, the first cost model may be selected such that, for any anticipated second cost model, the costs associated with traversal of a vertex or edge according to the first cost model are less than or equal to the costs associated with traversal of a corresponding vertex or edge according to an anticipated second cost model.

Changes in the costs may be effected by various mechanisms, and the monitoring of cost change incurring events at 95 and a suitable selection of the first cost model may be implemented based on the specific mechanism. Possible sources for changes in the costs include user preferences, such as avoidance options, variations in costs as a function of the time of the day and/or date in dynamical routing, the computation of alternative routes from the starting point to the destination, or traffic information signals, as will be explained next.

In one embodiment, the cost change monitored at 95 may be effected by a change in user preferences, e.g., by an avoidance option selected by the user. Such avoidance options may be taken into account in route determination by imposing cost penalties on, i.e., increasing the costs associated with, road segments that meet specific criteria and which are to be avoided. For example, when tunnels or ferry connections are to be avoided, the costs of all graph edges representing a tunnel or a ferry connection may be increased. The first cost model employed in the route search on the first graph at 92 to determine the estimation function values may then be selected as a cost model which does not take into account any cost increase or penalty imposed by avoidance options and may represent, e.g., a fastest route or shortest route cost model. The second cost model employed in the route search at 94 may initially be identical to the first cost model if no avoidance options have been selected by the user. The monitoring of cost change incurring events at 95 may be implemented by monitoring user inputs specifying user preferences at the input unit 6. The second cost model may then be updated at 97 by increasing costs according to the selected avoidance options. Since the costs for any vertex or edge according to the first cost model selected as indicated above represent a lower bound on the costs for the corresponding vertex or edge according to the second cost model, the estimation function values determined at 92 still underestimate the costs associated with a route from a vertex to the destination and may therefore still be employed when the A*-algorithm is re-executed at 94, the value of g(v)=costs2(s,v) [Eq. (6)] now being determined based on the updated second cost model which may vary due to user preferences.

In one embodiment, cost changes may be effected internally by the processor 2 in order to determine alternative routes. The estimation function values are determined at 92 by performing a route search on the first graph based on a first cost model which may or may not take into account user avoidance options. A first route from the starting point to the destination is determined at 94 based on the second cost model which is initially set to be equal to the first cost model. After the first route has been found, costs for edges and/ or vertices traversed by the first route are increased at 97. The route search at 94 is then repeated, based on the updated second cost model in which the first route has been made less favourable, and employing the estimation function values determined at 92 based on the first cost model. Thereby, a second route, alternative to the first route, from the starting point to the destination may be found. Steps 97, 98 and 94 may subsequently be iterated. For example, the costs along the second route may also be increased, and a third route may be determined, which is another alternative to both the first route and the second route, etc. It will be appreciated that in cases in which the processor 2 automatically updates the second cost model without requiring an external trigger event, the monitoring step 95 and the wait step 96 may also be omitted, and the steps 97, 98 and 94 may be automatically repeated whenever the second cost model is updated.

In one embodiment, cost changes may be caused by traffic information signals indicating, e.g., a traffic jam or other adverse traffic condition. The estimation function values are determined at 92 by performing a route search on the first graph based on a first cost model which may or may not take into account user avoidance options, but which does not take into account cost increases effected by adverse traffic conditions. The thus determined estimation function values are stored at 93. Assuming that no information on adverse traffic conditions is initially available, the route search at 94 may be performed based on a second cost model which may initially be set equal to the first cost model. The monitoring of cost change incurring events at 95 may be effected in that the processor 2 of the navigation system 1 evaluates traffic information signals received by the traffic message receiver 9, which may be configured, e.g., as a TMC receiver. When the processor 2 determines that the received traffic information signal may affect costs of a vertex or edge traversed by the route previously determined at 94, it updates the second cost model at 97 by incrementing the costs of the respective vertex or edge based on the received traffic information signal. In another embodiment, the update of the second cost model may be performed when a traffic information signal is received that is associated with any vertex or edge of the graph. The route is then re-determined based on the updated second cost model to determine g(v) and based on the estimation function values h(v) determined at 92. Since the costs of the first cost model represent lower bounds on the costs of the second cost model, the latter still provides a valid estimation function. Steps 97, 98 and 94 may be repeated whenever a further traffic information signal is received.

In one embodiment, cost changes may be effected by pre-defined time variations of costs as a function of time of day or date. Such time-varying costs are employed, e.g., in a dynamical route search in which varying traffic conditions as a function of time of the day and/or date are taken into account. The first cost model employed in determining the estimation function values at 92 may then be selected so that, for any vertex or edge, the costs of the first cost model correspond to the minimum costs associated with this vertex or edge at any time of the day and/or date. In the route determination at 94, the second cost model may then be selected in dependence on a time and/or date determined by the clock unit 10 so as to reflect the time-varying costs. In other words, the time-varying contributions to costs of vertices and edges are only taken into account in the route determination at 94, but not for the determining of the estimation function values at 92. Since the costs of the first cost model represent lower bounds on the costs of the second cost model, the latter still provides a valid estimation function and may be employed in the route search at 94. If time-varying contributions to the costs change, e.g., because of a pause made during traversal of a route, the second cost model which takes into account the time-varying costs may be updated at 97 and a route may be re-determined at 94.

It will be appreciated that user preferences, alternative route determination, traffic information signals, and dynamical route determination represent exemplary scenarios in which a cost model may vary, but that that the embodiment of Fig. 5 is not restricted to these scenarios.

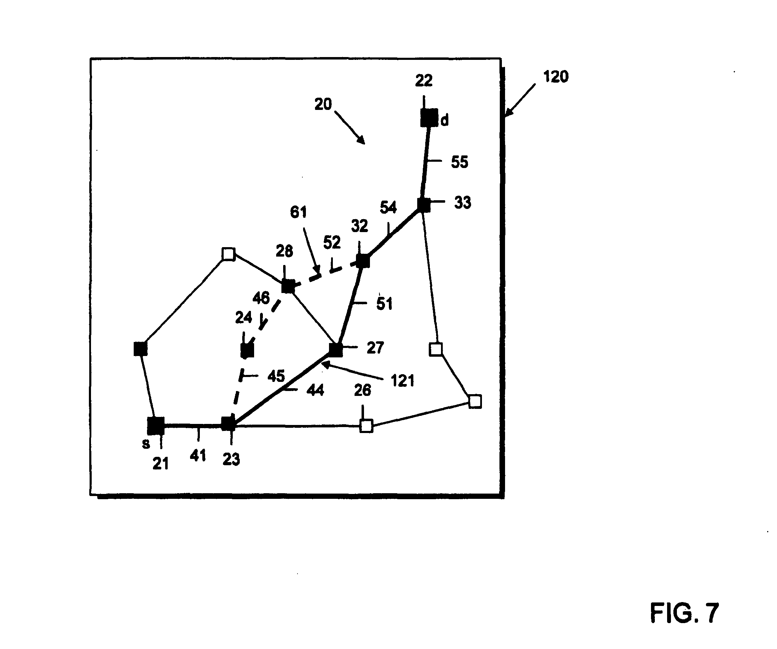

Referring to Fig. 7 which shows the exemplary road network 20 of Fig. 2, the method 90 according to the embodiment of Fig. 5 will be illustrated. As has been explained with reference to Fig. 2 above, the first and second graph are assumed to be identical and to represent the primary graph, in which graph edges represent road segments of the road network 20. At 92, estimation function values are assumed to be determined for the vertices 21, 23, 25, 24, 27, 28, 32 and 33, indicated by full squares in Fig. 7. The optimum route 61 from the starting point 21 to the destination 22 originally determined traverses road segments 41, 45, 46, 52, 54 and 55. If costs for the road segment 45 increase, due to, e.g., user preferences, alternative route determination, traffic information signals, or dynamical route determination, the route search at 94 may still be performed utilizing the estimation function values h(v) = costs1(v,d) originally determined for the vertices 21, 23, 25, 24, 27, 28, 32 and 33, but employing the updated second cost model having increased costs for the road segment 45 to determine g(v) = costs2(s,v). Due to the increased costs for the road segment 45, the new optimum route 121 traverses road segments 41, 44, 51, 54 and 55, as schematically indicated in Fig. 7. Since the estimation function values h(v) = costs1(v,d) determined in the first step are determined based on the graph 20, they provide an underestimation of the costs from a vertex v to the destination d which may be close to the actual costs according to the second cost model, thereby reducing the size of the portion of the graph 20 that has to be searched to find the route. While, when the first and second cost models are different, the route search at 94 may also require estimation function values to be determined for further vertices for which no estimation function value has been determined at 92, e.g., for vertex 26 in Fig. 7, the required additional estimation function values may be readily established as will be explained in more detail with reference to Figs. 9 and 10 below.

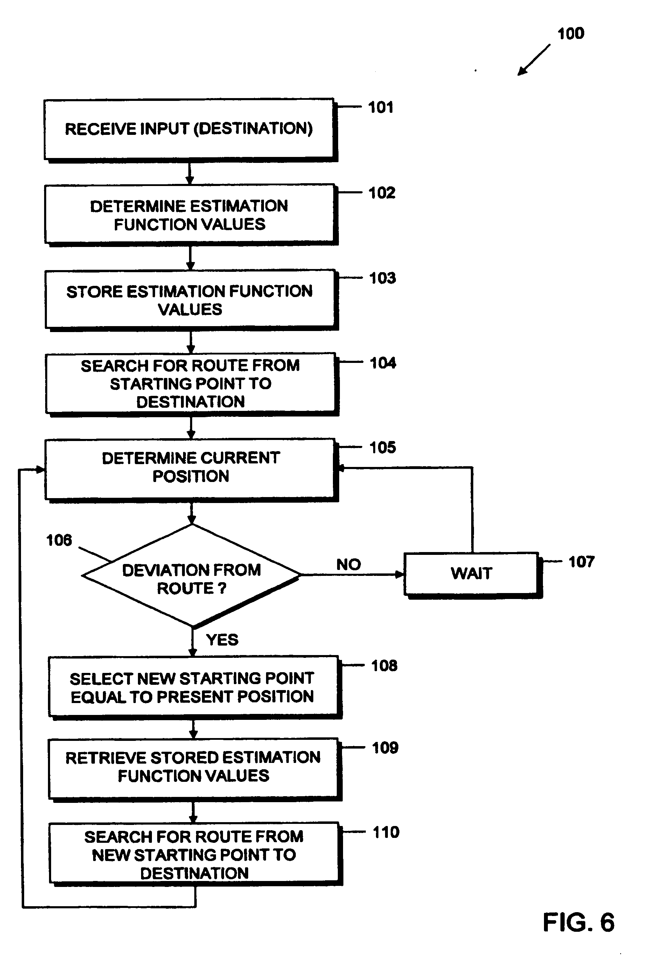

Next, with reference to Fig. 6, a method 100 according to another exemplary embodiment of the invention will be described. According to the method 100, estimation function values determined based on a first graph are employed to determine a route from a starting point to a destination and, when a deviation from the route is detected, from another starting point, e.g., from a current vehicle position, to the destination.

In the method 100, at 101 a user input specifying a desired destination is received. At 102, estimation function values for a plurality of vertices are determined based on a first graph and utilizing a first cost model. The determining of the estimation function values at 102 may be effected in any one of the ways described with reference to Figs. 2 and 3 above. In particular, the estimation function values for a plurality of vertices may be determined by performing a route search on the first graph starting at the destination and expanding towards the starting point. For a vertex v of the plurality of vertices, the estimation function value determined at 102 is set equal to the costs associated with a route from the vertex v to the destination d in the first cost model, costs1(v,d). At 103, the estimation function values costs1(v,d) determined at 102 are stored in a further storage unit for subsequent use. At 104, a search for a route from the starting point to the destination is performed on a second graph and based on a second cost model. The second cost model may be identical to or different from the first cost model. However, in one embodiment, the first cost model employed at 102 is selected so that, for any vertex or edge of the first graph, the costs according to the first cost model represent a lower bound on a corresponding vertex or edge of the second graph according to the second cost model. Similarly to step 73 in the method of Fig. 3, the route search at 104 is performed using an A*-algorithm or another algorithm which employs the estimation function values determined at 102 as an estimation function.

At 105, a current vehicle position is determined. In the navigation system 1, the current vehicle position may be determined based on a signal output by the GPS receiver 8. At 100, the current vehicle position is compared to positions along the route in order to determine whether the vehicle has left the route. If no deviation from the original route is determined at 106, the determining the current position at 105 is repeated after a pre-determined wait period at 107.

If, however, a deviation from the original route is detected at 106, at 108 the present vehicle position or another position proximal to the present vehicle position is selected as a new starting point. At 109, the stored estimation function values are retrieved. At 110, a search for a route from the new starting point to the destination is performed on the second graph and based on the second cost model. In the route search 110, the estimation function values determined at 102 are again employed as estimation function, e.g., in an A*-algorithm. The method then returns to the monitoring of the current vehicle position relative to the active route at 105. It will be appreciated that, by appropriate choice of the first cost model at 102, the estimation function values determined at 102 still represent a valid estimation function in the route search at 110 even when the first and second cost models are different. Further, as will be described in more detail below, the first graph, based on which the estimation function values are determined at 102, and the second graph, on which the route searches at 104 and 110 are performed, may be identical or different.

It is to be understood that the methods of Figs. 5 and 6 may be combined. For illustration, in one embodiment, the results of a first step in which estimation function values are determined based on a first graph may be employed both for determining several different routes from one starting point to the destination, such as in alternative route searches, and for determining routes from different starting points to the destination, e.g., when a deviation form the original route is detected.

Turning again to Fig. 7, the method 100 of the embodiment of Fig. 6 will be exemplarily illustrated with reference to the road network 20. Assuming that, after traversing road segment 41 of the route 61, the user turns onto road segment 44 rather than onto road segment 45 at the vertex 23, a deviation from the original route 61 is detected. Responsive thereto, a new route is determined from the present vehicle position on road segment 45, or from the next vertex 27 to be reached, to the destination 22, utilizing the estimation function values that have been previously determined in the first step.

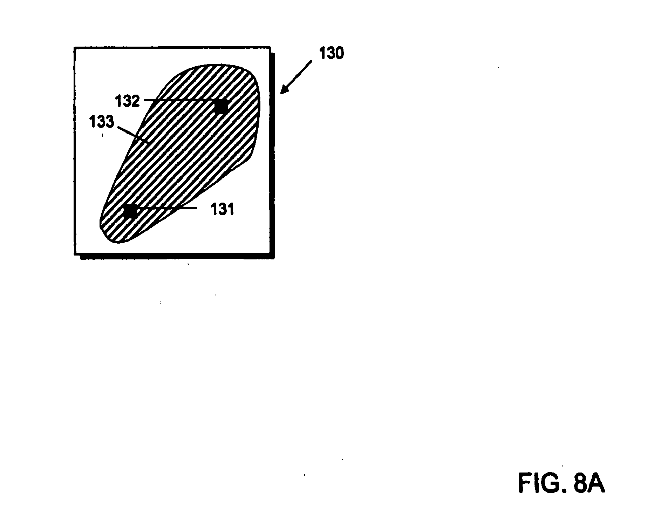

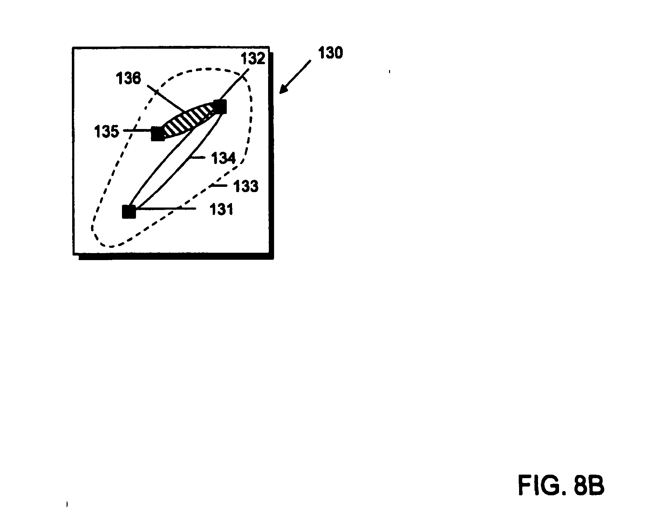

To further illustrate the method 100 of Fig. 6, reference will now be made to Fig. 8 which shows a map 130 containing a road network (not shown) and schematically illustrates portions of the map 130 that are visited in the various steps of the method 100 of Fig. 6. For illustrative purposes, it will be assumed that the cost model employed in determining the estimation function values at 102 and the cost model employed in the route searches at 104 and 110 are identical or differ only slightly. A starting point of the route search is indicated at 131, and a destination is indicated at 132. Fig. 8A schematically indicates a region 133 that is visited at step 102 when estimation function values are determined by performing a route search starting at the destination 132 and expanding towards the starting point 131. In the route search at 102, estimation function values are determined for vertices located in the region 133. In Fig. 8B, the region 134 schematically indicates the portion of the map 130 that is explored in the route search from the starting point 131 to the destination 132 at 104. As has been explained with reference to Fig. 4B above, the region 134 may be small since the estimation function values determined based on the graph may represent a good approximation to the exact minimum costs. When the vehicle leaves the route that has been originally determined and is located, e.g., at position 135, a further route search from the position 135 to the destination 132 is triggered. The region 136 schematically indicates the portion of the map 130 which is explored in this further route search. Since the further route search also employs the estimation function values determined based on the graph, the region 136 that needs to be explored may again be small. For illustrative purposes only, assuming that the cost model employed in determining the estimation function values at 102 and the cost model employed in the route searches at 104 and 110 are identical, the search trees in the searches at 102 and 104 may comprise collapse onto one search branch.

When the route search is performed in two steps or phases, as explained with reference to Figs. 1-8 above, the route search from the starting point to the destination performed in the second step or phase may require estimation function values for vertices for which no estimation function value has been determined in the first step or phase. This situation may occur, e.g., when the estimation function values have been determined only for a small part of all vertices in the first step, e.g., because of the termination criteria employed in the first step, when the first cost model and the second cost model employed in the first and second step, respectively, are different, or when the vehicle deviates from the original route. As will be explained next, estimation function values for additional vertices may be readily determined during the second step of route determination, where required.

Fig. 9 is a flow diagram representation of a method 140 that according to the invention is employed in the route search from the starting point to the destination in the second step, e.g., at 73 in the method 70 of Fig. 3, at 94 in the method 90 of Fig. 5, or at 104 and 110 in the method 100 of Fig. 6. For illustration rather than limitation, it will be assumed that the route search from the starting point to the destination is performed using an A*-algorithm.

At 141, an expansion step is performed from a "leave" of the search tree, i.e., from one of the last vertices in a search branch extending from the starting point. At 142, it is determined whether the estimation function value for the new vertex to which the expansion step is performed has already been determined in the first step of the route search. If the estimation function value has already been determined, at 143, the stored estimation function value costs1(v,d) for the new vertex determined in the first step is used as estimation function h(v) for the new vertex. If the estimation function value has not yet been determined, it is determined at 144.

The determining of the estimation function value for the new vertex at 144 may be performed in various ways. In one embodiment, the estimation function value for the new vertex is determined by returning to the first step, e.g., 72 in Fig. 3, and continuing the first step until the estimation function value is also known for the new vertex. For example, if the first step includes a route search starting at the destination and expanding towards the starting point, this route search may be continued until the new vertex is reached.

Referring to Fig. 10 which shows the road network 20 of Fig. 2, this method of determining the estimation function value for the new vertex will be exemplarily illustrated. It will be assumed that the costs of road segment 41 have increased, e.g., due to avoidance options, so that the optimum route from the starting point 21 to the destination 22 no longer traverses the road segment 41. After a first expansion step from the starting point 21 to the vertex 25, the subsequent expansion leads to the vertex 29, for which no estimation function value has been determined in the first step, as indicated by an open square. However, since both costs1(vertex 28, d) for a route from vertex 28 to the destination 22 and costs1(vertex 25, d) for a route from vertex 25 to the destination 22 have been determined in the first step, the estimation function value for vertex 29 may be determined by expanding the search from vertices 25 and 28 to vertex 29 and determining the smaller one of costs1(vertex28, d) plus the costs associated with a route from vertex 29 to vertex 28, and costs1(vertex25, d) plus the costs associated with a route from vertex 29 to vertex 25.

In another embodiment, the estimation function value for the new vertex at 144 may be determined based on information determined in the first step without requiring a route search of the first step to be continued. For illustration rather than limitation, an estimation function value for the new vertex may be determined based on a maximum value of the estimation function determined in the first step and the estimation function employed in the route search starting at the destination and expanding towards the starting point in first step. I.e., if

$$\mathrm{max}1 = \mathrm{max}_v\, \mathrm{costs}1(v,d) \qquad\qquad \mathrm{Eq.~(8)}$$

denotes the maximum costs for any vertex v determined in the first step, and h1(v) denotes the estimation function employed in the first step of the route search, which represents a lower bound on costs associated with a route from the starting point s to the vertex v, then the estimation function value h(v) for any vertex v, which is employed in the second step of the route search, may be set equal to

$$h(v) = costs1(v,d) \text{ if this value has been determined}$$
$$\text{in the first step, or} \qquad \text{Eq. (9a)}$$

$$h(v) = max1 - h1(v) \text{ otherwise.} \qquad \text{Eq. (9b)}$$

As has been explained with reference to Fig. 2A above, the estimation function h1(v) employed in the first step may be air-distance based, e.g., the air distance for a shortest route cost model or the air distance divided by a characteristic travel speed in a fastest route cost model.

Referring again to Fig. 10 for further illustration of this method of determining the estimation function value for the new vertex, it will again be assumed that the search from the starting point 21 to the destination 22 has expanded to vertex 29 for which no estimation function value has been determined in the first step. However, max1 = costs(vertex 25, d) has been determined in the first step. Further, assuming that an air-line based estimation function h1 has been employed in the first step, h1 (vertex 29) may be readily determined from the air-line distance between the vertex 29 and the starting point 21, schematically indicated at 153. From max1 and h1(vertex 29), h(vertex 29) may be determined according to Eq. (9b).

In another embodiment, the estimation function value for the new vertex may be determined based on the air distance from the new vertex to the destination.

Referring again to Fig. 10 for further illustration of this method of determining the estimation function value for the new vertex, the estimation function value for the vertex 29 max be determined based on the air-line distance between the vertex 29 and the destination 22, schematically indicated at 152.

While in the exemplary embodiments described with reference to Figs. 1-10 above the first graph, based on which the estimation function values are determined, and the second graph, on which the route search from the starting point to the destination is performed, have been assumed to be identical, the first and second graphs may also be distinct in other embodiments, as will be explained next.

Fig. 11 is a flow diagram representation of a method 160 according to one embodiment of the invention. In the method 160, at 161 a user input specifying a desired destination is received. At 162, estimation function values for a plurality of vertices and/or edges of a first graph are determined based on the first graph. The determining of the estimation function values at 162 may be effected in any one of the ways described with reference to Figs. 2 and 3 above. In particular, the estimation function values may be determined by performing a route search on the first graph starting at the destination and expanding towards a starting point. For a vertex of the first graph, the estimation function value determined at 162 may be set equal to the costs associated with a route from the vertex to the destination on the first graph. Additionally or alternatively, estimation function values may also be determined for characteristic points on edges of the first graph. At 163, estimation function values determined for elements, i.e., vertices or edges, of the first graph are mapped onto estimation function values for corresponding elements of a second graph. At 164, a route search is performed on the second graph utilizing the estimation function values established at 162 and mapped onto second graph elements at 163.

For illustration, the method 160 of Fig. 11 will be further illustrated with reference to Fig. 12. Fig. 12 shows the road network 20 of Fig. 2 which represents the first graph, based on which the estimation function values are determined. I.e., edges of the first graph represent road segments, and vertices of the first graph represent end points of road segments. Vertices of the first graph are indicated by solid squares, and edges of the first graph are indicated by solid lines in Fig. 12. The second graph 20' is the dual graph of the road network. I.e., vertices 171-178 of the second graph 20' represent road segments of the road network. For example, vertex 141 represents road segment 41, vertex 172 represents road segments 42 etc. Edges 181-185 of the second graph 20' represent end points of the road segments which allow a transition from one road segment to another road segment. For example, an edge 181 connecting vertices 171 and 172 indicates that a transition between road segments 41 and 42 is possible at the starting point 21. Similarly, the fact that there is no edge connecting vertices 174 and 175 indicates that a transition between road segments 45 and 44 at junction 23 is not possible. Therefore, turning restrictions may be readily taken into account in the dual graph, since they are reflected by interconnection of dual graph vertices by dual graph edges. Vertices of the second graph are indicated by open squares, and edges of the second graph are indicated by dashed lines in Fig. 12.

As may be seen in Fig. 12, the first graph 20 and second graph 20' may be different from one another, e.g., one being the dual graph of the other. The first step of the route search in which estimation function values are determined may then be performed on the first graph 20, e.g., by performing a route search on the first graph 20 starting at the destination 22 and expanding towards the starting point 21. For any vertex of the first graph 20 contained in any branch of the resulting search tree, the costs associated with a route from the vertex to the destination 22 on the first graph are thereby determined. In order for the second step, i.e., the route search from the starting point 21 to the destination 22, to be based on the costs determined in the route search in the first step, the costs determined in the first step for every vertex explored in the first step are then mapped onto corresponding elements of the second graph 20'. For example, if the vertices 171-178 of the second graph 20' are located on the center points of the edges of the first graph 20, as shown in Fig. 12, for any vertex of the vertices 171-178 of the second graph 20', an estimation function value may be determined based on the costs for the end points of the road segment which is represented by the respective vertex of the second graph 20'. For illustration, assuming that the costs for routes from vertex 21 to the destination 22 and from vertex 23 to the destination 22 have been determined in the first step, the estimation function value for the vertex 171 of the second graph 20' may be determined to be equal to the minimum of costs1(vertex 23, d) plus one half of the costs associated with traversal of road segment 41 from vertex 23 to vertex 21, and costs1(vertex 21, d) plus one half of the costs associated with traversal of road segment 41 from vertex 21 to vertex 23, where costs 1 represent the costs determined based on the first graph in the first step. After mapping of estimation function values from elements, i.e., vertices and/or edges, of the first graph 20 onto corresponding elements of the second graph 20', the route search on the second graph 20' may be performed as described for any one of the embodiments of Figs. 1-10 above.

It will be appreciated that the cost models employed in the first step and second step may be identical, but may also be different from each other when the first graph and the second graph are different. In particular, the first cost model that is employed to determine the estimation function values based on the first graph may be independent of additional costs incurred by user preferences, traffic information signals, time-varying cost contributions or similar, while the latter may be accounted for in the second cost model.

It is to be understood that the schematic illustration of the first and second graphs in Fig. 12 is only illustrative and is not to be taken in a limiting sense. In particular, the first and second graphs may be defined in more complex manners in order to account for one-way restrictions, different travel speeds in opposite travel directions, turning restrictions that are dependent on the travel direction or similar. For example, each travel direction of a road segment may be represented by an edge in the first graph and by a vertex in the second graph, so that a road segment which is no one-way street may be represented by two edges of the first graph and two vertices of the second graph, respectively.

Reverting to Fig. 11, since the first and second graph employed at 161 and 164 may be different from each other, the first graph may be selected so that a route search on the first graph is, on average, faster than a route search on the second graph. For example, the first graph may be selected or defined such that it has a smaller number of vertices than the second graph.

In one embodiment, the first step, i.e., the determining of the estimation function values, may be implemented by performing a route search between center points of road segments, neglecting information on the direction in which road segments have been reached and neglecting costs associated with turning from one road segment to another. In other words, the first step may be performed on a graph in which turning restrictions in the road network represented by the graph are neglected. One-way restrictions may still be taken into account. In another embodiment, one-way restrictions may also be neglected. The second step may subsequently be performed as described with reference to Figs. 11 and 12 above, either on the primary graph in which edges represent road segments, or on the dual graph in which vertices represent road segments.

In another embodiment, the first graph, based on which the estimation function values are determined in the first step, is the primary graph, while the route search in the second step is performed on the secondary graph. In the first step, turning restrictions may be neglected.

While the method according to various embodiments of the invention has been described as a two-step process with reference to Figs. 1-12 above, the method may also comprise more than two steps. Results of one or several of the preceding steps may be utilized in a subsequent step.

For illustration, the first step in which the estimation function values are determined, may comprise several sub-steps. I.e., the determining of the estimation function values for plural vertices of the first graph may be a multi-stage process in which results of one stage are utilized in another stage.

Fig. 13 is a flow diagram representation of a method 190 according to another embodiment of the invention, according to which the determining of the estimation function values is performed in a multi-stage process. At 191, a destination is specified by a user input. At 192 and 193, estimation function values are determined for vertices of a first graph by first performing a route search on a third graph at 192 and utilizing the results of this route search in a route search on the first graph at 193. The route search on the first graph yields estimation function values for a plurality of vertices. At 194, the estimation function values are utilized in a route search from the starting point to the destination.

In one embodiment, the third graph is defined so that the two-stage process at 192 and 193 allows the estimation function values for the plurality of vertices to be more readily determined. In one embodiment, at 193, a route search is performed using an A*-algorithm starting at the destination and expanding towards the starting point. The route search at 192 is performed on a third graph to provide more accurate estimation function for the A*-algorithm that is performed at 192.

An exemplary implementation of the two-stage process 192, 193 will be illustrated with reference to Figs. 14A and 14B which show the road network 20 of Fig. 2. In the exemplary implementation, the third graph 20" is defined based on a tiling and utilizing pre-defined information on tiles of the tiling, such as "resistance values" quantifying a resistance of the tiles, as described in European patent application No. 06 012 160.5.

As may be seen in Fig. 14A, a tiling 201 is defined which covers an area in which the road network 20 is contained and comprises a plurality of tiles 202-205. For any tile of the tiling 201, a pre-determined resistance value is provided which quantifies costs associated with routes traversing the tile, in relation to the graph geometry. For example, the resistance value for a tile 202-205 of the tiling may be defined to be equal to

$$R = \min_{vi} \min_{vj} [costs(vi, vj)/distance(vi, vj)] \qquad \text{Eq. (10)}$$

where vi and vj denote different vertices that are located on the boundary of the respective tile, costs(vi, vj) denotes the minimum costs associated with a route from vi to vj on the graph, and distance(vi, vj) denotes the air-line distance between vi and vj.

As seen in Figs. 14A and 14B, based on the local resistance values for the tiles 202-205, a simplified third graph 20" may be defined which, in all tiles other than the tile containing the starting point 21 and the destination 22, only includes vertices located on tile boundaries. In other words, for any tile which does not include the starting point 21 or the destination 22, the vertices located inside the tile are omitted, as is the case for vertices 28 and 30 of the road network 20. In the tiles in which vertices in the tile interior are omitted, e.g., in tile 205 in Fig. 14, new graph edges 211-214 connecting the vertices 24, 27, 29, 32 located on the boundary of the tile are defined and are assigned costs based on the geometrical arrangement of the vertices and the resistance value of the tile. More particularly, the costs for a newly introduced edge of the third graph connecting the vertices vi and vj are set equal to

$$costs3(vi, vj) = R \times distance\ (vi, vj). \qquad \text{Eq. (11)}$$

E.g., the costs for edge 214 are set equal to the product of the resistance R of tile 205 and the air-line distance of vertices 29 and 32. Due to the definition of the resistance values in Eq. (10), the costs for the new edges of the third graph represent a lower bound on the actual costs.

Based on the third graph 20" constructed as outlined above, Dijkstra's algorithm or an A*-algorithm employing an air-line based estimation function may then be performed at 192 in Fig. 13, starting at the starting point 21 and expanding towards the destination 22. Due to the construction of the third graph 20", the costs for routes from the starting point to any vertex of the third graph 20" represent a lower bound on costs associated with a route from the starting point 21 to the corresponding vertex on the first graph 20 and may therefore be utilized as an estimation function value when an A*-algorithm is performed on the first graph 20 at 193. For any vertex that is included in the first graph 20 but is not included in the third graph 20", i.e., for vertices located in tile interiors, the estimation function value employed at 193 may be determined from the estimation function values for the vertices located at the boundary of the respective tile. For example, the estimation function value for vertex 28 may be set equal to the minimum of the costs determined for any one of vertices 27, 28, 29 or 32. After determining the estimation function values for the plurality of vertices of the first graph 20, the method proceeds with the route search from the starting point to the destination on the second graph, as described in connection with any one of the preceding embodiments.

It will be appreciated that, while only the case in which the determining of estimation function values has been implemented as a two-stage process has been explained in detail with reference to Figs. 13 and 14, in other embodiments, also the route search from the starting point to the destination, i.e., the second step, may be implemented as a multi-stage process. Further, the methods according to the various embodiments of the invention are not limited to two- or three-stage processes, but may include any suitable plurality of steps or stages, a subsequent step or stage utilizing results obtained in a preceding step or stage.

In summary, according to the present invention, a method and device for determining a route is provided, wherein route is determined in a multi-step process. As is evident from the above description of preferred or advantageous embodiments, according to embodiments of the present invention, an accurate estimation function may be determined in a first step which may be utilized to reduce the complexity of a route search performed in a second step. The estimation function values determined in the first step may be utilized for several route searches.

The present invention may be advantageously employed in any optimum route search, in particular, in determining routes on a road network, without being limited to the latter.

**Claims**

1.  A method of determining a route to a destination (22; 82; 132), in particular on a road network, comprising determining, in a first step, estimation function values for a plurality of vertices (23, 24, 25, 27, 28, 32, 33) based on a first graph (20), an estimation function value for a vertex (21-33) representing a lower bound on costs associated with a route from said vertex (21-33) to said destination (22; 82; 132), and
    searching, in a second step, for a route (61) from a starting point (21; 81; 131) to said destination (22; 82; 132) on a second graph (20; 20') based on said estimation function values determined in said first step, wherein vertices (21-33; 171-174, 177, 178) of said second graph correspond to vertices (21-33) or edges (41-55) of said first graph, **characterized in that**
    said searching for said route (61) in said second step comprises determining whether an estimation function value for a given vertex (29) has been determined in said first step, and, if no estimation function value has been determined in said first step, determining said estimation function value for said given vertex (29).

2.  The method of claim 1,
    wherein said determining an estimation function value for a vertex (21-33) in said first step comprises searching for a route from said vertex (21-33) to said destination (22; 82; 132) on said first graph (20).

3.  The method of claim 2,
    wherein said searching for said route from said vertex (21-33) to said destination (22) is performed using Dijkstra's algorithm or an A*-algorithm on said first graph (20).

4.  The method of any one of the preceding claims,
    wherein said determining an estimation function value for a vertex (21-33) in said first step comprises performing a route search on said first graph (20) starting at said destination (22; 82; 132) and expanding towards said starting point (21; 81; 131).

5.  The method of any one of the preceding claims, comprising searching, in said second step, for at least one further route (121; 151), different from said route (61) to said destination (22; 82; 132) based on said estimation function values.

6.  The method of claim 5,
    wherein said at least one further route (121; 151) comprises at least one of an alternative route (121; 151) from said starting point (21) to said destination (22) or a route from another starting point (135) to said destination (132).

7.  The method of claim 5 or 6, comprising
    monitoring a current position (135) relative to said route (61) from said starting point (21; 131) to said destination (22; 132), wherein said searching for said at least one further route is automatically initiated based on a result of said monitoring said current position (135).

8.  The method of any one of claim 5-7, comprising
    monitoring changes of costs associated with vertices (21-33; 171-178) and/or edges (41-55; 181-185) of said second graph (20; 20'), wherein said searching for said at least one further route (121; 151) is automatically initiated based on a result of said monitoring said changes.

9.  The method of any one of the preceding claims, comprising
    storing at least a subset (5) of said estimation function values determined in said first step, and
    retrieving at least one estimation function value of said subset (5) in said second step.

10. The method of any one of the preceding claims,
    wherein said determining said estimation function values in said first step is based on a first cost model and said searching for said route (61) from said starting point (21; 81; 131) to said destination (22; 82; 132) in said second step is based on a second cost model.

**11.** The method of claim 10,
wherein costs associated with vertices (21-33) and/or edges (41-55) of said first graph (20) according to said first cost model are time-independent.

**12.** The method of claim 10 or 11,
wherein costs associated with vertices (21-33; 171-178) and/or edges (41-55; 181-185) of said second graph (20; 20') according to said second cost model are variable.

**13.** The method of claim 12, comprising
adjusting said costs according to said second cost model based on at least one of user preferences, a traffic information signal, a time of the day or a date.

**14.** The method of claim 13,
wherein said adjusting comprises increasing said costs according to said second cost model for at least one vertex (21-33; 171-178) and/or edge (41-55; 181-185) relative to said first cost model.

**15.** The method of any one of claims 12-14,
wherein costs associated with a vertex (21-33) and/or edge (41-55) of said first graph (20) according to said first cost model represent a lower bound on costs associated with a corresponding vertex (21-33; 171-178) and/or edge (41-55; 181-185) of said second graph (20; 20') according to said second cost model.

**16.** The method of any one of the preceding claims,
wherein said first graph (20) is defined so that a route search on said first graph (20) is, on average, faster than a route search on said second graph (20').

**17.** The method of any one of the preceding claims,
wherein said first graph (20) has a smaller number of vertices (21-33) than said second graph (20').

**18.** The method of any one of the preceding claims,
wherein vertices of said first graph represent road segments of a road network, and wherein, in said first step, turning restrictions on said road network are neglected.

**19.** The method of claim 18,
wherein, in said first step, one-way restrictions are taken into account.

**20.** The method of any one of claims 1-17,
wherein edges (41-55) of said first graph (20) represent road segments of a road network, and wherein vertices (171-178) of said second graph (20') represent road segments of said road network.

**21.** The method of claim 20,
wherein said first graph (20) is comprised by a dual graph of said second graph (20').

**22.** The method of any one of claims 1-15,
wherein said first graph (20) is identical to said second graph (20).

**23.** The method of any one of the preceding claims,
wherein said first step comprises defining a third graph (20"), performing a route search on said third graph (20"), and utilizing a result of said route search on said third graph (20") to determine said estimation function values for said plurality of vertices (23, 24, 25, 27, 28, 32, 33).

**24.** The method of any one of the preceding claims,
wherein said determining an estimation function value for a vertex (23, 24, 25, 27, 28, 32, 33) in said first step comprises searching for a route from said vertex (23, 24, 25, 27, 28, 32, 33) to said destination (22) on said first graph (20) based on pre-calculated information on said first graph (20).

**25.** The method of any one of the preceding claims,
wherein said first graph (20) and said second graph (20; 20') represents one of a road network, a computer network, or an infrastructure network.

**26.** The method of any one of the preceding claims,
wherein said method is performed by a navigation system (1) onboard a vehicle.

**27.** A device for determining a route to a destination (22; 82; 132), in particular on a road network, comprising
a storage unit (3) storing graph data (4) defining vertices (21-33) and edges (41-55) of at least one of a first graph (20) and a second graph (20; 20'), and
a processor (2) coupled to said storage unit (3) to retrieve said graph data (4), wherein the processor is configured to determine, in a first step, estimation function values for a plurality of vertices (23, 24, 25, 27, 28, 32, 33) based on said first graph (20), an estimation function value for a vertex (21-33) representing a lower bound on costs associated with a route from said vertex (21-33) to said destination (22; 82; 132), and to perform, in a second step, a route search from a starting point (21; 81; 131) to said destination (22; 82; 132) on a second graph (20; 20') based on said estimation function values determined in said first step , wherein vertices (21-33; 171-174, 177, 178) of said second graph correspond to vertices (21-33) or edges (41-55) of said first graph,
**characterized in that**
said processor, is configured to determine when performing said route search in said second step, whether an estimation function value for a given vertex (29) has been determined in said first step, and, if no estimation function value has been determined in said first step, to determine said estimation function value for said given vertex (29).

**28.** The device of claim 27,
wherein said processor (2) is configured to perform a route search on said first graph (20) to determine said estimation function values.

**29.** The device of claim 27 or 28,
wherein said processor (2) is configured to perform a route search starting at said destination (22; 82; 132) and expanding towards said starting point (21; 81; 131) to determine said estimation function values.

**30.** The device of any one of claims 27-29,
wherein, in said second step, said processor (2) is configured to perform at least one further route search to said destination (22; 82; 132) based on said estimation function values determined in said first step.

**31.** The device of any one of claims 27-30, comprising
a further storage unit (3), wherein said processor (2) is coupled to said further storage unit (3) to store said estimation function values (5) determined in said first step therein and to retrieve said estimation function values (5) therefrom for performing said second step.

**32.** The device of any one of claims 27-31,
wherein said processor (2) is configured to determine said estimation function values in said first step based on a first cost model and to perform said route search from said starting point (21; 81; 131) to said destination (22; 82; 132) in said second step based on a second cost model.

**33.** The device of claim 32,
wherein costs associated with vertices (21-33) and/or edges (41-55) of said first graph (20) according to said first cost model are time-independent, and wherein costs associated with vertices (21-33; 171-178) and/or edges (41-55; 181-185) of said second graph (20; 20') according to said second cost model are variable.

**34.** The device of claim 32 or 33,
wherein costs associated with a vertex (21-33) and/or edge (41-55) of said first graph (20) according to said first cost model represent a lower bound on costs associated with a corresponding vertex (21-33; 171-178) and/or edge (41-55; 181-185) of said second graph (20; 20') according to said second cost model.

**35.** The device of any one of claims 32-34, comprising
an input unit (6) to receive a user input, wherein said processor (2) is coupled to said input unit (6) and is configured to adjust costs of said second cost model based on said user input.

**36.** The device of any one of claims 32-35, comprising
a clock unit (10) to determine a time and/or date, wherein said processor (2) is coupled to said clock unit (10) and is configured to adjust costs of said second cost model based on said time and/or date.

**37.** The device of any one of claims 32-36, comprising
a traffic message receiver (9) to receive a traffic information signal, wherein said processor (2) is coupled to said traffic message receiver (9) and is configured to adjust costs of said second cost model based on said traffic information signal.

**38.** The device of any one of claims 35-37,
wherein said processor (2) is configured to increase said costs of said second cost model for at least one vertex (21-33; 171-178) and/or edge (41-55; 181-185) relative to said first cost model to adjust said costs of said second cost model.

**39.** The device of any one of claims 27-38, comprising
a position determining means (8) to determine a current vehicle position (135), wherein said processor (2) is coupled to said position determining means (8) and is configured to compare said current vehicle position (135) to said route (61) from said starting point (21; 81; 131) to said destination (22; 82; 132) to perform a further route search from said current vehicle position (135) to said destination (132) on said second graph (20; 20') based on a result of the comparison.

**40.** The device of any one of claims 27-39,
wherein said first graph (20) is defined so that a route search on said first graph (20) is, on average, faster than a route search on said second graph (20').

**41.** The device of any one of claims 27-40,
wherein said processor (2) is configured to perform the method of any one of claims 1-26.

**42.** A navigation system, comprising
the device of any one of claim 27-41 to determine a route, and
an output unit (7) to output information on said route.

**43.** A data storage medium, having stored thereon instructions which, when executed by a processor (2) of a navigation system (1), direct the navigation system (1) to perform the method according to any one of claims 1-26.

**Patentansprüche**

**1.** Verfahren zum Bestimmen einer Route zu einem Ziel (22; 82; 132), insbesondere auf einem Straßennetz, umfassend
Bestimmen, in einem ersten Schritt, von Schätzfunktionswerten für eine Mehrzahl von Knoten (23, 24, 25, 27, 28, 32, 33) basierend auf einem ersten Graphen (20), wobei ein Schätzfunktionswert für einen Knoten (21-33) eine untere Schranke für Kosten, die einer Route von dem Knoten (21-33) zu dem Ziel (22; 82; 132) zugeordnet sind, repräsentiert, und
Suchen, in einem zweiten Schritt, nach einer Route (61) von einem Startpunkt (21; 81; 131) zu dem Ziel (22; 82; 132) auf einem zweiten Graphen (20; 20') basierend auf den in dem ersten Schritt bestimmten Schätzfunktionswerten, wobei Knoten (21-33; 171-174, 177, 178) des zweiten Graphen Knoten (21-33) oder Kanten (41-55) des ersten Graphen entsprechen,
**dadurch gekennzeichnet,**
**dass** das Suchen nach der Route (61) in dem zweiten Schritt umfasst, dass bestimmt wird, ob ein Schätzfunktionswert für einen gegebenen Knoten (29) in dem ersten Schritt bestimmt worden ist, und, falls kein Schätzfunktionswert in dem ersten Schritt bestimmt worden ist, der Schätzfunktionswert für den gegebenen Knoten (29) bestimmt wird.

**2.** Verfahren nach Anspruch 1,
wobei das Bestimmen eines Schätzfunktionswerts für einen Knoten (21-33) in dem ersten Schritt ein Suchen nach einer Route von dem Knoten (21-33) zu dem Ziel (22; 82; 132) auf dem ersten Graphen (20) umfasst.

**3.** Verfahren nach Anspruch 2,
wobei das Suchen nach der Route von dem Knoten (21-33) zu dem Ziel (22) unter Verwendung eines Dijkstra-Algorithmus oder eines A*-Algorithmus auf dem ersten Graphen (20) durchgeführt wird.

**4.** Verfahren nach einem der vorhergehenden Ansprüche,
wobei das Bestimmen eines Schätzfunktionswerts für einen Knoten (21-33) in dem ersten Schritt ein Durchführen einer Routensuche auf dem ersten Graphen (20), die an dem Ziel (22; 82; 132) startet und in Richtung des Startpunkts (21; 81; 131) expandiert, umfasst.

5. Verfahren nach einem der vorhergehenden Ansprüche, umfassend
Suchen, in dem zweiten Schritt, nach wenigstens einer weiteren Route (121; 151), die von der Route (61) verschieden ist, zu dem Ziel (22; 82; 132) basierend auf den Schätzfunktionswerten.

6. Verfahren nach Anspruch 5,
wobei die wenigstens eine weitere Route (121; 151) wenigstens eine von einer alternativen Route (121; 151) von dem Startpunkt (21) zu dem Ziel (22) oder einer Route von einem weiteren Startpunkt (135) zu dem Ziel (132) umfasst.

7. Verfahren nach Anspruch 5 oder 6, umfassend
Überwachen einer aktuellen Position (135) relativ zu der Route (61) von dem Startpunkt (21; 131) zu dem Ziel (22; 132), wobei das Suchen nach der wenigstens einen weiteren Route basierend auf einem Ergebnis des Überwachens der aktuellen Position (135) automatisch eingeleitet wird.

8. Verfahren nach einem der Ansprüche 5-7, umfassend Überwachen von Änderungen von Kosten, die Knoten (21-33; 171-178) und/oder Kanten (41-55; 181-185) des zweiten Graphen (20; 20') zugeordnet sind, wobei das Suchen nach der wenigstens einen weiteren Route (121; 151) basierend auf einem Ergebnis des Überwachens der Änderungen automatisch eingeleitet wird.

9. Verfahren nach einem der vorhergehenden Ansprüche, umfassend
Speichern wenigstens einer Teilmenge (5) der in dem ersten Schritt bestimmten Schätzfunktionswerte, und
Auslesen wenigstens eines Schätzfunktionswerts der Teilmenge (5) in dem zweiten Schritt.

10. Verfahren nach einem der vorhergehenden Ansprüche,
wobei das Bestimmen der Schätzfunktionswerte in dem ersten Schritt auf einem ersten Kostenmodell basiert, und wobei das Suchen nach der Route (61) von dem Startpunkt (21; 81; 131) zu dem Ziel (22; 82; 132) in dem zweiten Schritt auf einem zweiten Kostenmodell basiert.

11. Verfahren nach Anspruch 10,
wobei Kosten, die nach dem ersten Kostenmodell Knoten (21-33) und/oder Kanten (41-55) des ersten Graphen (20) zugeordnet sind, zeitunabhängig sind.

12. Verfahren nach Anspruch 10 oder 11,
wobei Kosten, die nach dem zweiten Kostenmodell Knoten (21-33; 171-178) und/oder Kanten (41-55; 181-185) des zweiten Graphen (20; 20') zugeordnet sind, veränderlich sind.

13. Verfahren nach Anspruch 12, umfassend
Einstellen der Kosten nach dem zweiten Kostenmodell basierend auf wenigstens einem von Benutzerpräferenzen, einem Verkehrsinformationssignal, einer Tageszeit oder einem Datum.

14. Verfahren nach Anspruch 13,
wobei das Einstellen ein Erhöhen der Kosten nach dem zweiten Kostenmodell für wenigstens einen Knoten (21-33; 171-178) und/oder wenigstens eine Kante (41-55; 181-185) relativ zu dem ersten Kostenmodell umfasst.

15. Verfahren nach einem der Ansprüche 12-14,
wobei Kosten, die nach dem ersten Kostenmodell einem Knoten (21-33) und/oder einer Kante (41-55) des ersten Graphen (20) zugeordnet sind, eine untere Schranke für Kosten, die nach dem zweiten Kostenmodell einem korrespondierenden Knoten (21-33; 171-178) und/oder einer korrespondierenden Kante (41-55; 181-185) des zweiten Graphen (20; 20') zugeordnet sind, repräsentieren.

16. Verfahren nach einem der vorhergehenden Ansprüche,
wobei der erste Graph (20) so definiert ist, dass eine Routensuche auf dem ersten Graphen (20) im Mittel schneller als eine Routensuche auf dem zweiten Graphen (20') ist.

17. Verfahren nach einem der vorhergehenden Ansprüche,
wobei der erste Graph (20) eine kleinere Anzahl von Knoten (21-33) als der zweite Graph (20') aufweist.

**18.** Verfahren nach einem der vorhergehenden Ansprüche,
wobei Knoten des ersten Graphen Straßensegmente eines Straßennetzes repräsentieren, und wobei in dem ersten Schritt Richtungswechsel-Beschränkungen auf dem Straßennetz vernachlässigt werden.

**19.** Verfahren nach Anspruch 18,
wobei in dem ersten Schritt Einbahnstraßen-Beschränkungen berücksichtigt werden.

**20.** Verfahren nach einem der Ansprüche 1-17,
wobei Kanten (41-55) des ersten Graphen (20) Straßensegmente eines Straßennetzes repräsentieren, und wobei Knoten (171-178) des zweiten Graphen (20') Straßensegmente des Straßennetzes repräsentieren.

**21.** Verfahren nach Anspruch 20,
wobei der erste Graph (20) von einem dualen Graphen des zweiten Graphen (20') umfasst wird.

**22.** Verfahren nach einem der Ansprüche 1-15,
wobei der erste Graph (20) mit dem zweiten Graphen (20) identisch ist.

**23.** Verfahren nach einem der vorhergehenden Ansprüche,
wobei der erste Schritt ein Definieren eines dritten Graphen (20"), ein Durchführen einer Routensuche auf dem dritten Graphen (20") und ein Verwenden eines Ergebnisses der Routensuche auf dem dritten Graphen (20") zum Bestimmen der Schätzfunktionswerte für die Mehrzahl von Knoten (23, 24, 25, 27, 28, 32, 33) umfasst.

**24.** Verfahren nach einem der vorhergehenden Ansprüche,
wobei das Bestimmen eines Schätzfunktionswerts für einen Knoten (23, 24, 25, 27, 28, 32, 33) in dem ersten Schritt ein Suchen nach einer Route von dem Knoten (23, 24, 25, 27, 28, 32, 33) zu dem Ziel (22) auf dem ersten Graphen (20) basierend auf vorberechneter Information über den ersten Graphen (20) umfasst.

**25.** Verfahren nach einem der vorhergehenden Ansprüche,
wobei der erste Graph (20) und der zweite Graph (20; 20') eines von einem Straßennetz, einem Computernetz oder einem Infrastrukturnetz repräsentierten.

**26.** Verfahren nach einem der vorhergehenden Ansprüche,
wobei das Verfahren von einem Navigationssystem (1) an Bord eines Fahrzeugs durchgeführt wird.

**27.** Vorrichtung zum Bestimmen einer Route zu einem Ziel (22; 82; 132), insbesondere auf einem Straßennetz, umfassend
eine Speichereinheit (3), die Graph-Daten (4) speichert, welche Knoten (21-33) und Kanten (41-55) wenigstens eines von einem ersten Graphen (20) und einem zweiten Graphen (20; 20') definieren, und
einen Prozessor (2), der mit der Speichereinheit (3) gekoppelt ist, um die Graph-Daten (4) abzurufen, wobei der Prozessor eingerichtet ist, um in einem ersten Schritt Schätzfunktionswerte für eine Mehrzahl von Knoten (23, 24, 25, 27, 28, 32, 33) basierend auf dem ersten Graphen (20) zu bestimmen, wobei ein Schätzfunktionswert für einen Knoten (21-33) eine untere Schranke für Kosten, die einer Route von dem Knoten (21-33) zu dem Ziel (22; 82; 132) zugeordnet sind, repräsentiert, und um in einem zweiten Schritt eine Routensuche von einem Startpunkt (21; 81; 131) zu dem Ziel (22; 82; 132) auf einem zweiten Graphen (20; 20') basierend auf den in dem ersten Schritt bestimmten Schätzfunktionswerten durchzuführen, wobei Knoten (21-33; 171-174, 177, 178) des zweiten Graphen Knoten (21-33) oder Kanten (41-55) des ersten Graphen entsprechen,
**dadurch gekennzeichnet,**
**dass** der Prozessor eingerichtet ist, um bei Durchführen der Routensuche in dem zweiten Schritt zu bestimmen, ob ein Schätzfunktionswert für einen gegebenen Knoten (29) in dem ersten Schritt bestimmt worden ist, und, falls kein Schätzfunktionswert in dem ersten Schritt bestimmt worden ist, den Schätzfunktionswert für den gegebenen Knoten (29) zu bestimmen.

**28.** Vorrichtung nach Anspruch 27,
wobei der Prozessor (2) eingerichtet ist, um eine Routensuche auf dem ersten Graphen (20) durchzuführen, um die Schätzfunktionswerte zu bestimmen.

**29.** Vorrichtung nach Anspruch 27 oder 28,
wobei der Prozessor (2) eingerichtet ist, um eine Routensuche, die an dem Ziel (22; 82; 132) beginnt und in Richtung des Startpunkts (21; 81; 131) expandiert, durchzuführen, um die Schätzfunktionswerte zu bestimmen.

30. Vorrichtung nach einem der Ansprüche 27-29,
wobei in dem zweiten Schritt der Prozessor (2) eingerichtet ist, um wenigstens eine weitere Routensuche zu dem Ziel (22; 82; 132) basierend auf den in dem ersten Schritt bestimmten Schätzfunktionswerten durchzuführen.

31. Vorrichtung nach einem der Ansprüche 27-30, umfassend
eine weitere Speichereinheit (3), wobei der Prozessor (2) mit der weiteren Speichereinheit (3) gekoppelt ist, um die in dem ersten Schritt bestimmten Schätzfunktionswerte (5) darin zu speichern, und um die Schätzfunktionswerte (5) daraus abzurufen, um den zweiten Schritt durchzuführen.

32. Vorrichtung nach einem der Ansprüche 27-31,
wobei der Prozessor (2) eingerichtet ist, um die Schätzfunktionswerte in dem ersten Schritt basierend auf einem ersten Kostenmodell zu bestimmen, und um die Routensuche von dem Startpunkt (21; 81; 131) zu dem Ziel (22; 82; 132) in dem zweiten Schritt basierend auf einem zweiten Kostenmodell durchzuführen.

33. Vorrichtung nach Anspruch 32,
wobei Kosten, die nach dem ersten Kostenmodell Knoten (21-33) und/oder Kanten (41-55) des ersten Graphen (20) zugeordnet sind, zeitunabhängig sind, und wobei Kosten, die nach dem zweiten Kostenmodell Knoten (21-33; 171-178) und/oder Kanten (41-55; 181-185) des zweiten Graphen (20; 20') zugeordnet sind, veränderlich sind.

34. Vorrichtung nach Anspruch 32 oder 33,
wobei Kosten, die nach dem ersten Kostenmodell einem Knoten (21-33) und/oder einer Kante (41-55) des ersten Graphen (20) zugeordnet sind, eine untere Schranke für Kosten, die nach dem zweiten Kostenmodell einem korrespondierenden Knoten (21-33; 171-178) und/oder einer korrespondierenden Kante (41-55; 181-185) des zweiten Graphen (20; 20') zugeordnet sind, repräsentieren.

35. Vorrichtung nach einem der Ansprüche 32-34, umfassend
eine Eingabeeinheit (6) zum Empfangen einer Benutzereingabe, wobei der Prozessor (2) mit der Eingabeeinheit (6) gekoppelt und eingerichtet ist, um Kosten des zweiten Kostenmodells basierend auf der Benutzereingabe einzustellen.

36. Vorrichtung nach einem der Ansprüche 32-35, umfassend
eine Zeitgebereinheit (10) zum Bestimmen einer Zeit und/oder eines Datums, wobei der Prozessor (2) mit der Zeitgebereinheit (10) gekoppelt und eingerichtet ist, um Kosten des zweiten Kostenmodells basierend auf der Zeit und/oder dem Datum einzustellen.

37. Vorrichtung nach einem der Ansprüche 32-36, umfassend
einen Verkehrsnachrichtenempfänger (9) zum Empfangen eines Verkehrsinformationssignals, wobei der Prozessor (2) mit dem Verkehrsnachrichtenempfänger (9) gekoppelt und eingerichtet ist, um Kosten des zweiten Kostenmodells basierend auf dem Verkehrsinformationssignal einzustellen.

38. Vorrichtung nach einem der Ansprüche 35-37,
wobei der Prozessor (2) eingerichtet ist, um die Kosten des zweiten Kostenmodells für wenigstens einen Knoten (21-33; 171-178) und/oder wenigstens eine Kante (41-55; 181-185) relativ zu dem ersten Kostenmodell zu erhöhen, um die Kosten des zweiten Kostenmodells einzustellen.

39. Vorrichtung nach einem der Ansprüche 27-38, umfassend
ein Positionsbestimmungsmittel (8) zum Bestimmen einer aktuellen Fahrzeugposition (135), wobei der Prozessor (2) mit dem Positionsbestimmungsmittel (8) gekoppelt und eingerichtet ist, um die aktuelle Fahrzeugposition (135) mit der Route (61) von dem Startpunkt (21; 81; 131) zu dem Ziel (22; 82; 132) zu vergleichen, um eine weitere Routensuche von der aktuellen Fahrzeugposition (135) zu dem Ziel (132) auf dem zweiten Graphen (20; 20') basierend auf einem Ergebnis des Vergleichs durchzuführen.

40. Vorrichtung nach einem der Ansprüche 27-39,
wobei der erste Graph (20) so definiert ist, dass eine Routensuche auf dem ersten Graphen (20) im Mittel schneller als eine Routensuche auf dem zweiten Graphen (20') ist.

**41.** Vorrichtung nach einem der Ansprüche 27-40,
wobei der Prozessor (2) eingerichtet ist, um das Verfahren nach einem der Ansprüche 1-26 durchzuführen.

**42.** Navigationssystem, umfassend
die Vorrichtung nach einem der Ansprüche 27-41 zum Bestimmen einer Route und
eine Ausgabeeinheit (7) zum Ausgeben einer Information über die Route.

**43.** Datenspeichermedium mit darauf gespeicherten Anweisungen, welche bei Ausführung durch einen Prozessor (2) eines Navigationssystems (1) das Navigationssystem (1) zur Durchführung des Verfahrens nach einem der Ansprüche 1-26 veranlassen.

**Revendications**

**1.** Procédé pour déterminer un itinéraire vers une destination (22; 82; 132), en particulier sur un réseau routier, comprenant
la détermination, lors d'une première étape, de valeurs d'estimateur pour une pluralité de noeuds (23, 24, 25, 27, 28, 32, 33) à base d'un premier graphe (20), une valeur d'estimateur pour un noeud (21-33) représentant une limite inférieure des coûts associés à un itinéraire partant dudit noeud (21-33) vers ladite destination (22; 82; 132), et
la recherche, lors d'une deuxième étape, d'un itinéraire (61) à partir d'un point de départ (21; 81; 131) vers ladite destination (22; 82; 132) sur un deuxième graphe (20; 20'), à base desdites valeurs d'estimateur déterminées lors de ladite première étape, des noeuds (21-33; 171-174, 177, 178) dudit deuxième graphe correspondant à des noeuds (21-33) ou tranches (41-55) dudit premier graphe,
**caractérisé en ce que**
ladite recherche dudit itinéraire (61) lors de ladite deuxième étape comprend la détermination si une valeur d'estimateur pour un noeud donné (29) a été déterminée lors de ladite première étape, et, si aucune valeur d'estimateur n'a été déterminée lors de ladite première étape, la détermination de ladite valeur d'estimateur pour ledit noeud donné (29).

**2.** Procédé selon la revendication 1, dans lequel ladite détermination d'une valeur d'estimateur pour un noeud (21-33) lors de ladite première étape comprend la recherche d'un itinéraire à partir dudit noeud (21-33) vers ladite destination (22; 82; 132) sur ledit premier graphe (20).

**3.** Procédé selon la revendication 2, dans lequel ladite recherche d'un itinéraire à partir dudit noeud (21-33) vers ladite destination (22) est exécutée en utilisant l'algorithme de Dijkstra ou un algorithme A* sur ledit premier graphe (20).

**4.** Procédé selon l'une quelconque des revendication précédentes, dans lequel ladite détermination d'une valeur d'estimateur pour un noeud (21-33) lors de ladite première étape comprend l'exécution d'une recherche d'itinéraire sur ledit premier graphe (20) débutant à ladite destination (22; 82; 132) et s'étendant vers ledit point de départ (21; 81; 131).

**5.** Procédé selon l'une quelconque des revendication précédentes, comprenant la recherche, lors de ladite deuxième étape, d'au moins un autre itinéraire (121; 151), différent dudit itinéraire (61), vers ladite destination (22; 82; 132) à base desdites valeurs d'estimateur.

**6.** Procédé selon la revendication 5, dans lequel ledit au moins un autre itinéraire (121; 151) comprend au moins l'un d'un itinéraire alternatif (121; 151) à partir dudit point de départ (21) vers ladite destination (22), ou d'un itinéraire à partir d'un autre point de départ (135) vers ladite destination (132).

**7.** Procédé selon la revendication 5 or 6, comprenant la surveillance d'une position courante (135) par rapport audit itinéraire (61) à partir dudit point de départ (21; 131) vers ladite destination (22; 132), dans lequel ladite recherche dudit au moins un autre itinéraire est initialisée automatiquement à base d'un résultat de ladite surveillance de ladite position courante (135).

**8.** Procédé selon l'une quelconque des revendications 5-7, comprenant la surveillance de modifications de coûts associés à des noeuds (21-33; 171-178) et/ou des tranches (41-55; 181-185) dudit deuxième graphe (20; 20'), dans lequel ladite recherche dudit au moins un autre itinéraire (121; 151) est initialisée automatiquement à base d'un résultat de ladite surveillance desdites modifications.

9. Procédé selon l'une quelconque des revendications précédentes, comprenant le stockage d'au moins un sous-ensemble (5) desdites valeurs d'estimateur déterminées lors de ladite première étape, et la récupération d'au moins une valeur d'estimateur dudit sous-ensemble (5) lors de ladite deuxième étape.

10. Procédé selon l'une quelconque des revendications précédentes, dans lequel ladite détermination desdites valeurs d'estimateur lors de ladite première étape se base sur un premier modèle de coûts, et ladite recherche dudit itinéraire (61) à partir dudit point de départ (21; 81; 131) vers ladite destination (22; 82; 132) lors de ladite deuxième étape se base sur un deuxième modèle de couts.

11. Procédé selon la revendication 10, dans lequel les coûts associés à des noeuds (21-33) et/ou des tranches (41-55) dudit premier graphe (20) selon le premier modèle de coûts sont indépendants du temps.

12. Procédé selon la revendication 10 or 11, dans lequel les coûts associés à des noeuds (21-33; 171-178) et/ou des tranches (41-55; 181-185) dudit deuxième graphe (20; 20') selon ledit deuxième modèle de coûts sont variables.

13. Procédé selon la revendication 12, comprenant l'ajustement desdits coûts selon ledit deuxième modèle de coûts à base d'au moins une préférence d'utilisateur, d'un signal d'information routière, d'une heure du jour, ou d'une date.

14. Procédé selon la revendication 13, dans lequel ledit ajustement comprend l'augmentation desdits coûts selon ledit deuxième modèle de coûts pour au moins un noeud (21-33; 171-178) et/ou une tranche (41-55; 181-185) par rapport audit premier modèle de coûts.

15. Procédé selon l'une quelconque des revendications 12-14, dans lequel les coûts associés à un noeud (21-33) et/ou à une tranche (41-55) dudit premier graphe (20) selon ledit modèle de coûts représentent une limite inférieure des coûts associés à un noeud (21-33; 171-178) et/ou à une tranche (41-55; 181-185) correspondant dudit deuxième graphe (20; 20') selon ledit deuxième modèle de coûts.

16. Procédé selon l'une quelconque des revendications précédentes, dans lequel ledit premier graphe (20) est défini de telle manière qu'une recherche d'itinéraire sur ledit premier graphe (20) est en moyenne plus rapide qu'une recherche d'itinéraire sur ledit deuxième graphe (20').

17. Procédé selon l'une quelconque des revendications précédentes, dans lequel ledit premier graphe (20) présente un nombre plus petit de noeuds (21-33) que ledit deuxième graphe (20').

18. Procédé selon l'une quelconque des revendications précédentes, dans lequel des noeuds dudit premier graphe représentent des segments de route d'un réseau routier, et dans lequel, lors de ladite première étape, des restrictions d'obliquer sur ledit réseau routier sont négligées.

19. Procédé selon la revendication 18, dans lequel, lors de ladite première étape, des restrictions de circulation en sens unique sont pris en compte.

20. Procédé selon l'une quelconque des revendications 1-17, dans lequel des tranches (41-55) dudit premier graphe (20) représentent des segments de route d'un réseau routier, et dans lequel des noeuds (171-178) dudit deuxième graphe (20') représentent des segments de route dudit réseau routier.

21. Procédé selon la revendication 20, dans lequel ledit premier graphe (20) est constitué d'un graphe dual dudit deuxième graphe (20').

22. Procédé selon l'une quelconque des revendications 1-15, dans lequel ledit premier graphe (20) est identique audit deuxième graphe (20).

23. Procédé selon l'une quelconque des revendications précédentes, dans lequel ladite première étape comprend la définition d'un troisième graphe (20"), l'exécution d'une recherche d'itinéraire sur ledit troisième graphe (20"), et l'utilisation d'un résultat de ladite recherche d'itinéraire sur ledit troisième graphe (20") pour déterminer lesdites valeurs d'estimateur pour ladite pluralité de noeuds (23, 24, 25, 27, 28, 32, 33).

24. Procédé selon l'une quelconque des revendications précédentes, dans lequel ladite détermination d'une valeur d'estimateur pour un noeud (23, 24, 25, 27, 28, 32, 33) lors de ladite première étape comprend la recherche d'un itinéraire à partir dudit noeud (23, 24, 25, 27, 28, 32, 33) vers ladite destination (22) sur ledit premier graphe (20) à base d'une information pré-calculée sur ledit premier graphe (20).

**25.** Procédé selon l'une quelconque des revendications précédentes, dans lequel ledit premier graphe (20) et ledit deuxième graphe (20; 20') représentent l'un d'un réseau routier, d'un réseau d'ordinateur, d'un réseau d'infrastructure.

**26.** Procédé selon l'une quelconque des revendications précédentes, dans lequel ledit procédé est exécuté par un système de navigation (1) embarqué dans un véhicule.

**27.** Dispositif pour déterminer un itinéraire vers une destination (22; 82; 132), en particulier sur un réseau routier, comprenant

une unité de stockage (3) stockant des données de graphe (4) définissant des noeuds (21-33) et des tranches (41-55) d'au moins l'un d'un premier graphe (20) et d'un deuxième graphe (20; 20'), et

un processeur (2) couplé à ladite unité de stockage (3) pour récupérer lesdites données de graphe (4), le processeur étant configuré pour déterminer, lors d'une première étape, des valeurs d'estimateur pour une pluralité de noeuds (23, 24, 25, 27, 28, 32, 33) à base dudit premier graphe (20), une valeur d'estimateur pour un noeud (21-33) représentant une limite inférieure des coûts associés à un itinéraire à partir dudit noeud (21-33) vers ladite destination (22; 82; 132), et pour exécuter, lors d'une deuxième étape, une recherche d'itinéraire à partir d'un point de départ (21; 81; 131) vers ladite destination (22; 82; 132) sur un deuxième graphe (20; 20') à base desdites valeurs d'estimateur déterminées lors de ladite première étape, des noeuds (21-33; 171-174, 177, 178) dudit deuxième graphe correspondant à des noeuds (21-33) ou tranches (41-55) dudit premier graphe,

**caractérisé en ce que**

ledit processeur est configuré pour déterminer, lorsqu'il exécute ladite recherche d'itinéraire lors de ladite deuxième étape, si une valeur d'estimateur pour un noeud donnée (29) a été déterminée lors de ladite première étape, et, si aucune valeur d'estimateur n'a été déterminée lors de ladite première étape, pour déterminer ladite valeur d'estimateur pour ledit noeud donné (29).

**28.** Dispositif selon la revendication 27, dans lequel ledit processeur (2) est configuré pour exécuter une recherche d'itinéraire sur ledit premier graphe (20) pour déterminer lesdites valeurs d'estimateur.

**29.** Dispositif selon la revendication 27 or 28, dans lequel ledit processeur (2) est configuré pour exécuter une recherche d'itinéraire débutant à ladite destination (22; 82; 132) et s'étendant vers ledit point de départ (21; 81; 131) pour déterminer lesdites valeurs d'estimateur.

**30.** Dispositif selon l'une quelconque des revendications 27-29, dans lequel, lors de ladite deuxième étape, ledit processeur (2) est configuré pour exécuter au moins une autre recherche d'itinéraire vers ladite destination (22; 82; 132) à base desdites valeurs d'estimateur déterminées lors de ladite première étape.

**31.** Dispositif selon l'une quelconque des revendications 27-30, comprenant une autre unité de stockage (3), dans lequel ledit processeur (2) est couplé à ladite autre unité de stockage (3) pour y stocker lesdites valeurs d'estimateur (5) déterminées lors de ladite première étape, et pour en récupérer lesdites valeurs d'estimateur (5) pour exécuter ladite deuxième étape.

**32.** Dispositif selon l'une quelconque des revendications 27-31, dans lequel ledit processeur (2) est configuré pour déterminer lesdites valeurs d'estimateur lors de ladite première étape à base d'un premier modèle de coûts, et pour exécuter ladite recherche d'itinéraire à partir dudit point de départ (21; 81; 131) vers ladite destination (22; 82; 132) lors de ladite deuxième étape à base d'un deuxième modèle de coûts.

**33.** Dispositif selon la revendication 32, dans lequel les coûts associés à des noeuds (21-33) et/ou des tranches (41-55) dudit premier graphe (20) selon ledit premier modèle de coûts sont indépendants du temps, et dans lequel les coûts associés à des noeuds (21-33; 171-178) et/ou des tranches (41-55; 181-185) dudit deuxième graphe (20; 20') selon ledit deuxième modèle de coûts sont variables.

**34.** Dispositif selon la revendication 32 or 33, dans lequel les coûts associés à un noeud (21-33) et/ou une tranche (41-55) dudit premier graphe (20) selon ledit premier modèle de coûts représentent une limite inférieure des coûts associés à un noeud (21-33; 171-178) et/ou une tranche (41-55; 181-185) correspondant dudit deuxième graphe (20; 20') selon ledit deuxième modèle de coûts.

**35.** Dispositif selon l'une quelconque des revendications 32-34, comprenant une unité d'entrée (6) pour recevoir une entrée d'utilisateur, dans lequel ledit processeur (2) est couplé à ladite unité d'entrée (6) et est configuré pour ajuster les coûts dudit deuxième modèle de coûts à base de ladite entrée d'utilisateur.

**36.** Dispositif selon l'une quelconque des revendications 32-35, comprenant une unité d'horloge (10) pour déterminer une heure et/ou une date, dans lequel ledit processeur (2) est couplé à ladite unité d'horloge (10) et est configuré pour ajuster les coûts dudit deuxième modèle de coûts à base de ladite heure et/ou date.

**37.** Dispositif selon l'une quelconque des revendications 32-36, comprenant un récepteur de message d'informations routières (9) pour recevoir un signal d'information routière, dans lequel ledit processeur (2) est couplé audit récepteur de message d'informations routières (9) et est configuré pour ajuster les coûts dudit deuxième modèle de coûts à base dudit signal d'information routière.

**38.** Dispositif selon l'une quelconque des revendications 35-37, dans lequel ledit processeur (2) est configuré pour augmenter lesdits coûts dudit deuxième modèle de coûts pour au moins un noeud (21-33; 171-178) et/ou une tranche (41-55; 181-185) par rapport audit premier modèle de coûts pour ajuster lesdits coûts dudit deuxième modèle de coûts.

**39.** Dispositif selon l'une quelconque des revendications 27-38, comprenant un moyen de détermination de position (8) pour déterminer une position courante de véhicule (135), dans lequel ledit processeur (2) est couplé audit moyen de détermination de position (8) et est configuré pour comparer ladite position courante de véhicule 135) audit itinéraire (61) à partir dudit point de départ (21; 81; 131) vers ladite destination (22; 82; 132) pour exécuter une autre recherche d'itinéraire à partir de ladite position courante de véhicule (135) vers ladite destination (132) sur ledit deuxième graphe (20; 20') à base d'un résultat de la comparaison.

**40.** Dispositif selon l'une quelconque des revendications 27-39, dans lequel ledit premier graphe (20) est défini de telle manière qu'une recherche d'itinéraire sur ledit premier graphe (20) est en moyenne plus rapide qu'une recherche d'itinéraire sur ledit deuxième graphe (20').

**41.** Dispositif selon l'une quelconque des revendications 27-40, dans lequel ledit processeur (2) est configuré pour exécuter le procédé selon l'une quelconque des revendications 1-26.

**42.** Système de navigation, comprenant le dispositif selon l'une quelconque des revendications 27-41 pour déterminer un itinéraire, et une unité de sortie (7) pour produire une information sur ledit itinéraire.

**43.** Support de stockage de données, sur lequel sont stockées des instructions qui, lorsqu'elles sont exécutées par un processeur (2) d'un système de navigation (1), pilotent le système de navigation (1) pour exécuter le procédé selon l'une quelconque des revendications 1-26.

FIG. 1

FIG. 2A

FIG. 2B

70

RECEIVE INPUT (DESTINATION) — 71

DETERMINE ESTIMATION
FUNCTION
VALUES BASED ON FIRST GRAPH — 72

SEARCH FOR ROUTE TO
DESTINATION ON A SECOND
GRAPH  BASED ON ESTIMATION
FUNCTION VALUES — 73

FIG. 3

FIG. 4A

FIG. 4B

EP 1 988 362 B1

FIG. 4C

90

RECEIVE INPUT (DESTINATION) — 91

DETERMINE ESTIMATION FUNCTION VALUES USING FIRST COST MODEL — 92

STORE ESTIMATION FUNCTION VALUES — 93

SEARCH FOR ROUTE BASED ON SECOND COST MODEL — 94

95 — CHANGE IN COSTS? — NO → WAIT — 96

YES

UPDATE SECOND COST MODEL — 97

RETRIEVE STORED ESTIMATION FUNCTION VALUES — 98

FIG. 5

100

```
┌──────────────────────────────┐
│  RECEIVE INPUT (DESTINATION)  │───101
└──────────────────────────────┘
              │
              ▼
┌──────────────────────────────┐
│   DETERMINE ESTIMATION        │───102
│   FUNCTION VALUES             │
└──────────────────────────────┘
              │
              ▼
┌──────────────────────────────┐
│  STORE ESTIMATION FUNCTION    │───103
│  VALUES                       │
└──────────────────────────────┘
              │
              ▼
┌──────────────────────────────┐
│  SEARCH FOR ROUTE FROM        │───104
│  STARTING POINT TO            │
│  DESTINATION                  │
└──────────────────────────────┘
              │
              ▼
┌──────────────────────────────┐
│  DETERMINE CURRENT            │───105
│  POSITION                     │
└──────────────────────────────┘
              │
              ▼
         ◇ DEVIATION FROM ◇ ──NO──▶ ┌──────────┐
106      ◇   ROUTE ?     ◇          │   WAIT   │───107
              │                      └──────────┘
             YES
              ▼
┌──────────────────────────────┐
│  SELECT NEW STARTING POINT    │───108
│  EQUAL TO PRESENT POSITION    │
└──────────────────────────────┘
              │
              ▼
┌──────────────────────────────┐
│  RETRIEVE STORED ESTIMATION   │───109
│  FUNCTION VALUES              │
└──────────────────────────────┘
              │
              ▼
┌──────────────────────────────┐
│  SEARCH FOR ROUTE FROM        │───110
│  NEW STARTING POINT TO        │
│  DESTINATION                  │
└──────────────────────────────┘
```

**FIG. 6**

FIG. 7

FIG. 8A

FIG. 8B

140

PERFORM EXPANSION STEP TO
NEW VERTEX — 141

142 ← ESTIMATION
FUNCTION VALUE
KNOWN FOR NEW
VERTEX ? → NO

YES

143 — USE STORED ESTIMATION
FUNCTION VALUE

DETERMINE ESTIMATION
FUNCTION VALUE FOR NEW
VERTEX — 144

FIG. 9

FIG. 10

160

┌─────────────────────────────────┐
│                                 │ ─ 161
│   RECEIVE INPUT (DESTINATION)   │
│                                 │
└─────────────────────────────────┘
                 │
                 ▼
┌─────────────────────────────────┐
│    DETERMINE ESTIMATION         │ ─ 162
│        FUNCTION                 │
│  VALUES BASED ON FIRST GRAPH    │
└─────────────────────────────────┘
                 │
                 ▼
┌─────────────────────────────────┐
│  MAP ESTIMATION FUNCTION VALUES │ ─ 163
│    FROM FIRST GRAPH ELEMENTS    │
│  ONTO CORRESPONDING SECOND      │
│       GRAPH ELEMENTS            │
└─────────────────────────────────┘
                 │
                 ▼
┌─────────────────────────────────┐
│     SEARCH FOR ROUTE TO         │ ─ 164
│     DESTINATION BASED ON        │
│  MAPPED ESTIMATION FUNCTION     │
│          VALUES                 │
└─────────────────────────────────┘

FIG. 11

FIG. 12

190

| RECEIVE INPUT (DESTINATION) | — 191 |

| STEP 1 A:<br>ROUTE SEARCH ON THIRD<br>GRAPH | — 192 |

| STEP 1 B:<br>ROUTE SEARCH ON FIRST<br>GRAPH TO DETERMINE<br>ESTIMATION FUNCTION VALUES | — 193 |

| STEP 2:<br>SEARCH FOR ROUTE TO<br>DESTINATION ON A SECOND<br>GRAPH BASED ON ESTIMATION<br>FUNCTION VALUES | — 194 |

**FIG. 13**

FIG. 14A

FIG. 14B

EP 1 988 362 B1

45

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6477515 B1

- EP 06012160 A